(19) Europäisches Patentamt
European Patent Office
Office européen des brevets

(11) **EP 4 738 550 A1**

(12) **EUROPEAN PATENT APPLICATION**
published in accordance with Art. 153(4) EPC

(43) Date of publication:
06.05.2026 Bulletin 2026/19

(51) International Patent Classification (IPC):
H01M 50/117 (2021.01)          H01M 4/62 (2006.01)
H01M 6/18 (2006.01)            H01M 10/052 (2010.01)
H01M 10/058 (2010.01)          H01M 10/0562 (2010.01)
H01M 50/11 (2021.01)           H01M 50/103 (2021.01)
H01M 50/124 (2021.01)          H01M 50/548 (2021.01)
H01M 50/562 (2021.01)

(21) Application number: 24872507.9

(22) Date of filing: 27.09.2024

(52) Cooperative Patent Classification (CPC):
H01M 4/62; H01M 6/18; H01M 10/052;
H01M 10/0562; H01M 10/058; H01M 50/103;
H01M 50/11; H01M 50/117; H01M 50/124;
H01M 50/548; H01M 50/562; Y02E 60/10

(86) International application number:
PCT/JP2024/034652

(87) International publication number:
WO 2025/070725 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.09.2023 JP 2023169843

(71) Applicant: Murata Manufacturing Co., Ltd.
Nagaokakyo-shi, Kyoto 617-8555 (JP)

(72) Inventor: ISHIZAKI, Hayato
Nagaokakyo-shi, Kyoto 617-8555 (JP)

(74) Representative: Reddie & Grose LLP
The White Chapel Building
10 Whitechapel High Street
London E1 8QS (GB)

(54) **SOLID STATE BATTERY**

(57) The present invention provides a solid-state battery that is sufficiently excellent in fixing strength between an exterior portion and an external electrode. The present invention relates to a solid-state battery including a battery element, an exterior portion present on an outer surface of the battery element, and an external electrode in contact with the exterior portion, in which the exterior portion includes an oxide ceramic containing: Li (lithium); Mg (magnesium); and one or more elements (M) selected from the group consisting of Group 4 and Group 5 elements, and Bi (bismuth) exists between the exterior portion and the external electrode.

FIG. 1

EP 4 738 550 A1

**Description**

TECHNICAL FIELD

The present invention relates to a solid-state battery.

BACKGROUND ART

In recent years, the demand for batteries as power sources for portable electronic devices such as mobile phones and portable personal computers has been greatly expanded. In batteries used for such applications, an electrolyte (electrolytic solution) such as an organic solvent has been conventionally used as a medium for moving ions. However, a battery having the above configuration has a risk of leakage of the electrolytic solution. In addition, the organic solvent or the like used as the electrolytic solution is a combustible substance. Therefore, it is required to enhance the safety of the battery.

Therefore, in order to enhance the safety of the battery, a solid-state battery using a solid electrolyte as an electrolyte instead of the electrolytic solution has been studied.

For example, Patent Documents 1 to 4 propose a solid-state battery having an exterior portion containing an oxide ceramic on an outer surface of a battery element including a positive electrode layer, a negative electrode layer, and a solid electrolyte layer therebetween.

PRIOR ART DOCUMENTS

PATENT DOCUMENTS

Patent Document 1: PCT International Publication No. 2019/167856
Patent Document 2: Japanese Patent Application Laid-Open No. 2007-173212
Patent Document 3: Japanese Patent Application Laid-Open No. 2003-92092
Patent Document 4: PCT International Publication No. 2019/181909

SUMMARY OF THE INVENTION

Problem to be solved by the invention

However, in the conventional solid-state battery described above, there has been a problem that when firing (for example, 1100°C or more) is performed in the production process thereof, the oxide ceramic included in the exterior portion reacts with the solid electrolyte included in the battery element, the solid electrolyte is decomposed, and a byproduct is generated.

Therefore, the exterior portion includes an oxide ceramic containing Li (lithium), Mg (magnesium), and one or more elements (M) selected from the group consisting of Group 4 and Group 5 elements, allowing the reaction with the solid electrolyte to be prevented to some extent, but the following new problem occurs.

Specifically, a silica-based additive is commonly used for the external electrode disposed in contact with the exterior portion in order to be bonded, but with only the silica-based additive, a side reaction occurs with the exterior portion, and a defect occurs in the exterior portion. More specifically, a crack was generated at a corner portion of the exterior portion. On the other hand, no additive is added to the external electrode, leading to a problem that a bonding layer is not formed at an interface between the external electrode and the exterior portion, and sufficient fixing strength cannot be obtained therebetween.

An object of the present invention is to provide a solid-state battery that is sufficiently excellent in fixing strength between an exterior portion and an external electrode.

It is also an object of the present invention to provide a solid-state battery that is sufficiently excellent in fixing strength between an exterior portion and an external electrode although the external electrode does not contain an additive (for example, a silica-based additive).

Means for solving the problem

The present invention relates to:

a solid-state battery having a battery element, an exterior portion covering a surface of the battery element, and an external electrode for drawing electric power generated in the battery element to the outside while being in direct contact with the exterior portion, in which
the exterior portion includes an oxide ceramic containing:

Li (lithium);
Mg (magnesium); and
one or more elements (M) selected from the group consisting of Group 4 and Group 5 elements, and
Bi (bismuth) is present between the exterior portion and the external electrode.

Advantageous effect of the invention

The solid-state battery of the present invention is sufficiently excellent in fixing strength between the exterior portion and the external electrode.

BRIEF EXPLANATION OF DRAWINGS

FIG. 1 is a schematic view showing an example of a solid-state battery of the present invention, and is a composite view of a perspective view and a sectional view.
FIG. 2 is a schematic perspective view showing another example of a solid-state battery of the present invention.
FIG. 3A is an example of a schematic sectional view for explaining an interface region between an oxide ceramic constituting an exterior portion and a material constituting an external electrode.
FIG. 3B is another example of a schematic sectional view for explaining an interface region between an oxide ceramic constituting an exterior portion and a material constituting an external electrode.
FIG. 4A is an example of a schematic view of a TEM photograph showing the presence of Bi atoms when an interface region between an oxide ceramic constituting an exterior portion and a material constituting an external electrode is observed by TEM-EDX (energy dispersive X-ray spectroscopy).
FIG. 4B is an example of a schematic view of a TEM photograph showing the presence of Bi atoms when an interface region between an oxide ceramic constituting an exterior portion and a material constituting an external electrode is observed by TEM-EDX.
FIG. 4C is an example of a schematic view of a TEM photograph showing the presence of Bi atoms when an interface region between an oxide ceramic constituting an exterior portion and a material constituting an external electrode is observed by TEM-EDX.
FIG. 4D is an example of a schematic view of a TEM photograph showing the presence of Bi atoms when an interface region between an oxide ceramic constituting an exterior portion and a material constituting an external electrode is observed by TEM-EDX.
FIG. 5A is a plan view for explaining a method for measuring fixing strength in Examples, and is a schematic plan view of a lateral push test.
FIG. 5B is a side view for explaining a method for measuring fixing strength in Examples, and is a schematic side view of a lateral push test.

MODE FOR CARRYING OUT THE INVENTION

[Solid-state battery]

The present invention provides a solid-state battery. The term "solid-state battery" as used herein refers in a broad sense to a battery in which its components (particularly an electrolyte layer) are constituted of solids, and refers in a narrow sense to an "all-solid-state battery" in which its components (particularly all the components) are constituted of solids. In one preferred aspect, the solid-state battery according to the present invention is a stacked solid-state battery in which the respective layers forming the battery constituent unit are stacked on each other, and preferably each of such layers is made of a sintered body. The "solid-state battery" as used herein includes what is called a "secondary battery" capable of repeating charging and discharging, and a "primary battery" capable of discharging only. In one preferred aspect of the present invention, the "solid-state battery" is a "secondary battery". The "secondary battery" is not excessively limited by its name, and can encompass, for example, an electrochemical device such as a "power storage device". The term "solid electrolyte" as used herein refers to one that includes no gel-like or liquid electrolyte (liquid).
The term "plan view" in the present specification refers to a state (a top view or a bottom view) when an object is viewed from the upper side or the lower side along a thickness direction based on a stacking direction of layers described later and constituting the solid-state battery. In addition, the "sectional view" as used herein refers to a sectional state (sectional view) when viewed from a direction substantially perpendicular to the thickness direction T based on the stacking direction of the layers to be described later that constitute the solid-state battery. The "side view" is a state when the solid-state battery is mounted and viewed from the side of a thickness (height) direction T thereof, and means the same as lateral view. The mounting is a mounting with a surface (planar surface) of the maximum area constituting the appearance of the solid-state battery being a bottom surface. The "vertical direction" and "horizontal direction" as used directly or indirectly herein correspond to a vertical direction and a horizontal direction in the drawings, respectively. Unless otherwise specified, the same reference signs or symbols shall denote the same members or sites or the same meanings.

In a preferred aspect, it can be understood that a downward direction in a vertical direction (that is, a direction in which gravity acts) corresponds to a "downward direction", and an opposite direction corresponds to an "upward direction".

The solid-state battery of the present invention may have any shape in a plan view, and typically has a rectangular shape. The rectangular shape encompasses squares and rectangles.

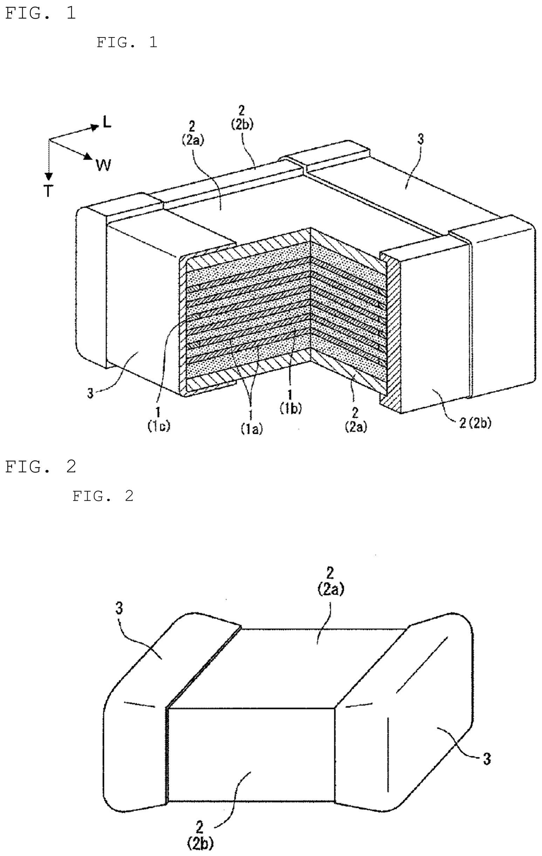

The solid-state battery of the present invention has, for example, a layered structure (particularly, a stacked structure) as shown in FIG. 1. The solid-state battery of the present invention has a battery element 1 and an exterior portion 2 covering a surface of the battery element 1, and typically further has an external electrode 3 for drawing electric power (particularly current) generated in the battery element to the outside. FIG. 1 is a schematic sectional view showing an example of a solid-state battery of the present invention. In FIG. 1, L, W, and T refer to a longitudinal direction, a width direction, and a thickness direction of the solid-state battery, respectively.

The exterior portion 2 includes a main surface exterior portion 2a (for example, a set of main surface exterior portions 2a) that is present on the outer surface of the battery element 1 and covers the main surface of the battery element 1, and a side surface exterior portion 2b (for example, a set of side surface exterior portions 2b) that covers the side surface of the battery element 1. The main surface exterior portion 2a and the side surface exterior portion 2b have a form as separate members from each other (or a separate member structure) in FIG. 1, but may have a form in which the main surface exterior portion 2a and the side surface exterior portion 2b are integrated (or an integrated structure) as illustrated in FIG. 2. FIG. 2 is a schematic perspective view showing another example of a solid-state battery of the present invention. The solid-state battery of FIG. 2 is the same as the solid-state battery of FIG. 1 except that the main surface exterior portion 2a and the side surface exterior portion 2b are integrated.

In the solid-state battery of the present invention, Bi is present between the exterior portion 2 and the external electrode 3. Specifically, Bi exists in the interface region between the oxide ceramic constituting the exterior portion 2 and the material constituting the external electrode 3 (for example, a conductive material containing Ag (silver)). Bi exists between the exterior portion 2 and the external electrode 3 (particularly in the interface region), thereby more sufficiently improving the fixing strength (hereinafter, may be simply referred to as "fixing strength") between the exterior portion 2 and the external electrode 3. Details of the mechanism in which the fixing strength is more sufficiently improved by the presence of Bi (particularly uneven distribution in the interface region) are not clear, but it is considered that the mechanism is based on the following phenomenon. Bi becomes a liquid phase during baking the external electrode, and wets the interface between the external electrode and the exterior without reacting with the exterior material, and the Bi layer functions as a bonding layer. When Bi is not present between the exterior portion 2 and the external electrode 3, the fixing strength between the exterior portion 2 and the external electrode 3 is reduced.

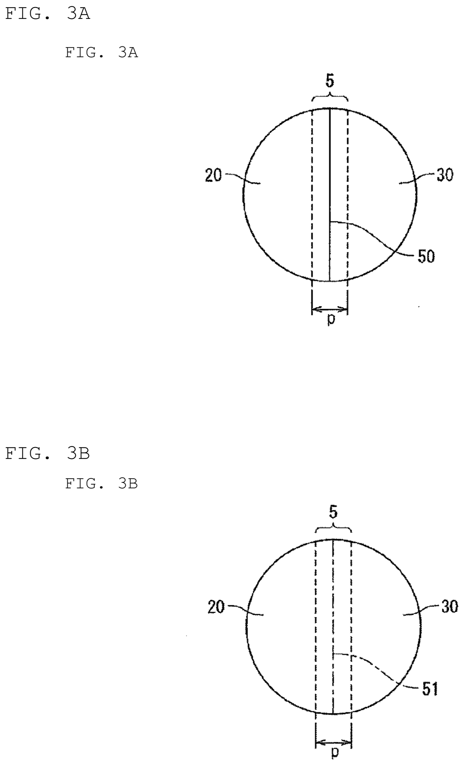

The "interface region" in which Bi exists is a boundary region between the oxide ceramic and the external electrode constituent material. The interface between them is not necessarily clearly defined (or observed). For example, when the interface is clearly defined (or observed), as shown in FIG. 3A, the interface region 5 is a boundary region between the oxide ceramic 20 and the external electrode constituent material 30, is a region including two adjacent boundary regions in which the interface 50 is disposed in the region, and is disposed adjacent to each other on both sides of the interface 50. In addition, for example, when the interface is not clearly defined (or observed), as illustrated in FIG. 3B, the interface region 5 is a region where it is inferred that the interface 51 will be present based on the attribute (in particular, chemical composition) of the surrounding region if the interface 51 is present. The presence of such an interface 51 can be inferred based on the difference in composition at each analysis point by analyzing the chemical composition at several analysis points in the region of the oxide ceramic 20 and the external electrode constituent material 30 as the surrounding region (FIG. 3B). The width p of the interface region 5 (refer to FIGS. 3A and 3B) is not particularly limited, and is typically 1 to 100 nm, and is preferably 2 to 80 nm, more preferably 3 to 60 nm, and particularly preferably 5 to 50 nm from the viewpoint of further improving the fixing strength.

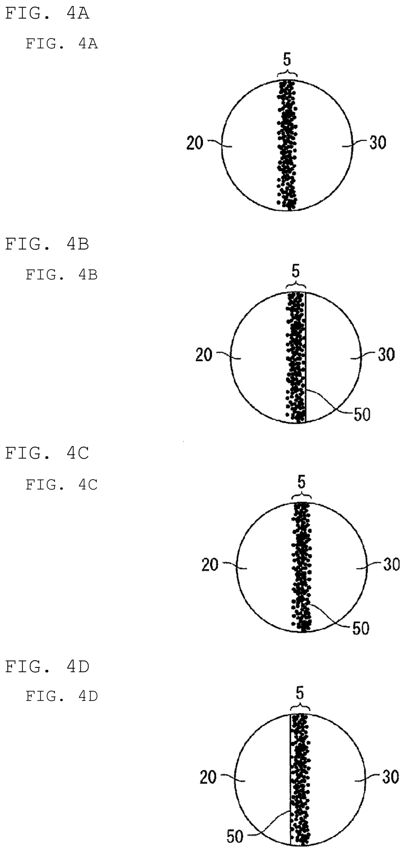

In a preferred embodiment of the solid-state battery of the present invention, as shown in FIGS. 4A to 4D, Bi is intensively segregated in the interface region 5 between the oxide ceramic 20 constituting the exterior portion and the material (for example, Ag (silver)) 30 constituting the external electrode. The region (portion) where Bi segregates in this manner may be positioned as the above-described "interface region". Therefore, the width p of the interface region may correspond to the width of the region (portion) where Bi is segregated. FIGS. 4A to 4D are schematic views of TEM photographs showing the presence of Bi atoms when a section of an interface region between an oxide ceramic constituting an exterior portion and a material constituting an external electrode is cut out by FIB ion milling and then observed by TEM-EDX (energy dispersive X-ray spectroscopy) at a magnification of 1 million times. In these schematic views, the black spot means the presence of Bi. "Concentrated" refers to a state of more dense existence. For example, Bi more densely exists in the interface region 5 than in the surrounding region. In addition, for example, Bi is more concentrated in the interface region than in the surrounding region. The "segregation" means that Bi is unevenly deposited (or exists) in the interface region 5 as described above.

In addition, in expression from another viewpoint, when the interface region is observed by TEM-EDX at, for example, a magnification of 1 million times, Bi exists in a band shape or a layer shape between the oxide ceramic 20 constituting the exterior portion and the material 30 constituting the external electrode. The reason why Bi is observed to be present in a band shape or a layer shape as described above is that Bi "more densely exists" (or "more concentrated") in the interface region 5. Bi is typically present more densely in the interface region 5 having the width p than in the surrounding region, and as a result, is concentrated. For example, the concentration ratio of Bi may be 1.05 or more in terms of a ratio of "concentration in interface region/concentration in peripheral region".

Specifically, for example, FIG. 4A shows that Bi is intensively segregated between the oxide ceramic 20 constituting the exterior portion and the material (for example, Ag (silver)) 30 constituting the external electrode when the interface is not clearly defined (or observed).

In addition, for example, FIG. 4B shows that when the interface 50 is clearly defined (or observed), Bi is intensively segregated between the oxide ceramic 20 constituting the exterior portion and the material (for example, a conductive material containing Ag (silver)) 30 constituting the external electrode. Specifically, as shown in FIG. 4B, Bi may intensively exist in a region in the vicinity of the external electrode constituent material 30 in the region of the oxide ceramic 20. Therefore, in this case, the interface region 5 in which Bi exists can be positioned as a degenerated layer on the surface of the oxide ceramic 20.

In addition, for example, FIG. 4C shows that when the interface 50 is clearly defined (or observed), Bi is intensively segregated between the oxide ceramic 20 constituting the exterior portion and the material (for example, Ag (silver)) 30 constituting the external electrode. Specifically, as shown in FIG. 4C, Bi may intensively exist in the vicinity region of both the region in the vicinity of the external electrode constituent material 30 in the region of the oxide ceramic 20 and the region in the vicinity of the oxide ceramic 20 in the region of the external electrode constituent material 30. Therefore, in this case, the interface region 5 in which Bi exists can be positioned as a composite degenerated layer of the degenerated layer on the surface of the oxide ceramic 20 and the degenerated layer on the surface of the external electrode constituent material 30.

In addition, for example, FIG. 4D shows that when the interface 50 is clearly defined (or observed), Bi is intensively segregated between the oxide ceramic 20 constituting the exterior portion and the material (for example, a conductive material containing Ag (silver)) 30 constituting the external electrode. Specifically, as shown in FIG. 4D, Bi may intensively exist in a region near the oxide ceramic 20 in the region of the external electrode constituent material 30. Therefore, in this case, the interface region 5 in which Bi exists can be positioned as a degenerated layer on the surface of the external electrode constituent material 30.

The presence of Bi between the exterior portion 2 and the external electrode 3 (in particular, concentrated segregation of Bi in the interface region) can be achieved, for example, by the following aspect.

Aspect (1): A Bi-containing layer is formed as a bonding layer in at least a region in which an external electrode is formed on a surface of an exterior portion.

Aspect (2): An oxide ceramic containing Bi is used as at least a part of the oxide ceramic constituting the exterior portion.

Aspect (3): A sintering agent containing Bi is used as a material constituting an external electrode.

Aspect (4): An oxide ceramic containing Bi is used as at least a part of the oxide ceramic constituting the battery element.

Aspect (5): Two or more of the above aspects (1) to (4) are used in combination.

The existence of Bi between the exterior portion 2 and the external electrode 3 (particularly, concentrated segregation of Bi in the interface region) is preferably achieved by at least the aspect (1) (particularly, only the aspect (1)) from the viewpoint of further improving the fixing strength.

In the aspect (1), a Bi-containing layer is formed as a bonding layer at least in a region in which an external electrode is to be formed on the surface of the exterior portion. The Bi-containing layer is an oxide layer (or an oxide film) containing Bi. Examples of the Bi supply source include bismuth nitrate (or a hydrate thereof), bismuth oxide, and bismuth alkoxide. The Bi-containing layer can be formed, for example, by applying an alcohol solution containing a Bi supply source to the surface of the exterior portion, drying the solution, and then firing the dried solution. The alcohol is not particularly limited as long as the Bi supply source can be dissolved, and examples thereof include 2-ethoxyethanol. The drying temperature is not particularly limited, and may be, for example, 50 to 150°C (particularly 80 to 120°C). The firing temperature is not particularly limited, and may be, for example, 300 to 500°C (particularly 350 to 450°C). In the aspect (1), when the Bi-containing layer is formed at least in the region where the external electrode is formed on the surface of the exterior portion, the external electrode may be in indirect contact with the exterior portion via the Bi-containing layer in the solid-state battery.

In a preferred embodiment of the aspect (1), from the viewpoint of further improving the fixing strength, the Bi-containing layer is preferably an oxide layer containing not only Bi but also Li and/or Mg, and is preferably an oxide layer containing Bi and Li. The Bi-containing layer may further contain Mg and/or Si. Examples of the Li supply source include lithium nitrate and lithium hydroxide. Examples of the Mg supply source include magnesium ethoxide and magnesium hydroxide. Examples of the Si supply source include silicon tetraethoxide. The Li and Mg supply sources, along with the Bi supply source, are contained in the alcohol solution. The alcohol solution may contain ethyl acetoacetate in order to more uniformly disperse bismuth in the solution.

In the aspect (1), the Bi-containing layer is composed of an oxide ceramic, and has, for example, a chemical composition represented by the following general formula (A).

[Chemical Formula 1] $\quad\quad Li_{x1}A^1_{x2}Bi_{x3}Mg_{x4}Si_{x5}M_{x6}O_{x7}$ (A)

In the formula (A), $A^1$ is one or more elements selected from the group consisting of Na, K, Rb, Ca, Sr, Ba, Sc, Y, Mo, W, Zn, Al, Ga, Ge, Sn, and Sb.

M is one or more elements selected from the same group as the element M described later, and from the viewpoint of further improving the moisture resistance, and preferably includes one or more elements selected from the group consisting of Ti, Zr, Hf, Nb, and Ta, more preferably includes Ti, and still more preferably includes only Ti, or includes Ti and Zr or Ta.

In the formula (A),

$$x7=\{x1+ax2+dx3+2x4+4x5+nx6\}/2$$

(n is an average valence of M, a is an average valence of $A^1$, and d is a valence of Bi and is 3 or 5)

Specifically, n is the average valence of M. The average valence of M is, for example, the same value as the average valence of $A^1$ described later when M is recognized as n1 of elements X having a valence a+, n2 of elements Y having a valence b+, and n3 of elements Z having a valence c+.

a is the average valence of $A^1$. The average valence of $A^1$ is, for example, a value represented by $(n1 \times a + n2 \times b + n3 \times c)/(n1 + n2 + n3)$ in a case where the number of elements X having a valence of a+ is n1, the number of elements Y having a valence of b+ is n2, and the number of elements Z having a valence of c+ is n3 in the elements represented by $A^1$.

The oxygen number x7 may be deviated from the above value by about $\pm 10\%$. That is, oxygen deficiency or interstitial oxygen may be included in part.

In the formula (A), x1 typically satisfies $0 < x1 \leq 1.0$, and from the viewpoint of further improving the fixing strength, the moisture resistance, and the reaction resistance, preferably satisfies $0.3 \leq x1 \leq 1.0$, and more preferably satisfies $0.5 \leq x1 \leq 1.0$.

x2 typically satisfies $0 \leq x2 \leq 1.0$, and from the viewpoint of further improving the fixing strength, moisture resistance, and reaction resistance, x2 preferably satisfies $0 \leq x2 \leq 0.5$ and is more preferably 0.

x3 typically satisfies $0 < x3 \leq 1.0$, and from the viewpoint of further improving the fixing strength, the moisture resistance, and the reaction resistance, preferably satisfies $0.1 \leq x3 \leq 0.7$, and more preferably satisfies $0.2 \leq x3 \leq 0.5$.

x4 typically satisfies $0 \leq x4 \leq 1.0$, and from the viewpoint of further improving the fixing strength, the moisture resistance, and the reaction resistance, preferably satisfies $0 \leq x4 \leq 0.5$, more preferably satisfies $0 \leq x4 \leq 0.3$, and still more preferably satisfies $0.01 \leq x4 \leq 0.3$.

x5 typically satisfies $0 \leq x5 \leq 1.0$, and from the viewpoint of further improving the fixing strength, the moisture resistance, and the reaction resistance, preferably satisfies $0 \leq x5 \leq 0.5$, and more preferably satisfies $0 \leq x5 \leq 0.3$.

x6 typically satisfies $0 \leq x6 < 1.0$, and from the viewpoint of further improving the fixing strength, moisture resistance, and reaction resistance, x6 preferably satisfies $0 \leq x6 < 0.35$ and is more preferably 0.

The chemical composition of the oxide ceramic can be determined by ICP analysis (inductively coupled plasma method), LA-ICP-MS (laser ablation ICP mass spectrometry) analysis, or the like. EDX (energy dispersive X-ray spectroscopy) or WDX (wavelength dispersive X-ray spectroscopy) may be used. The chemical composition may be obtained by performing quantitative analysis (composition analysis) at arbitrary 100 points of each of arbitrary 100 sintered grains and calculating the average of the resulting values.

In the aspect (1), the thickness of the Bi-containing layer is not particularly limited, and may coincide with the width p of the interface region 5 described above, and from the viewpoint of further improving the fixing strength, the thickness is preferably 1 nm or more and 200 nm or less, and more preferably 10 nm or more and 100 nm or less.

In the aspect (1), when the Bi-containing layer is formed as the bonding layer at least in the region in which the external electrode is formed on the surface of the exterior portion, Bi exists between the exterior portion 2 and the external electrode 3, and Bi is intensively segregated particularly in the interface region.

In the aspect (1), regarding the descriptions of the "exterior portion", the "battery element", the "external electrode", and the "method for producing a solid-state battery", the same descriptions as those of the "exterior portion", the "battery element", the "external electrode", and the "method for producing a solid-state battery" described later can be applied except that a Bi-containing layer is formed as a bonding layer at least in a region in which the external electrode is formed on a surface of the exterior portion.

In the aspect (2), an oxide ceramic containing Bi is used as at least a part of the oxide ceramic constituting the exterior portion. The Bi-containing oxide ceramic used has a chemical composition represented by the same general formula as the later-described general formula (1) except that A contains Bi and $\alpha 2$ falls within the following range. $\alpha 2$ typically satisfies $0 < \alpha 2 \le 1.0$, and from the viewpoint of further improving the fixing strength, preferably satisfies $0.001 \le \alpha 2 \le 0.050$, and more preferably satisfies $0.002 \le \alpha 2 \le 0.030$.

In the aspect (2), the oxide ceramic having the above chemical composition is used for formation of the exterior portion, whereby Bi exists between the exterior portion 2 and the external electrode 3, and Bi is intensively segregated particularly in the interface region.

In the aspect (2), for the descriptions of the "exterior portion", the "battery element", the "external electrode", and the "method for producing a solid-state battery", the same descriptions as those of the "exterior portion", the "battery element", the "external electrode", and the "method for producing a solid-state battery" described later can be applied except that the oxide ceramic having the above chemical composition is used for the formation of the exterior portion.

In the aspect (3), a sintering agent containing Bi is used as a material constituting the external electrode together with an electron conductive material. Examples of the sintering agent containing Bi include bismuth-containing glass (for example, B-Si-Bi-O glass).

In the aspect (3), the sintering agent containing Bi is used for formation of the external electrode, whereby Bi exists between the exterior portion 2 and the external electrode 3, and Bi is intensively segregated particularly in the interface region.

In the aspect (3), for the descriptions of the "exterior portion", the "battery element", the "external electrode", and the "method for producing a solid-state battery", the same descriptions as those of the "exterior portion", the "battery element", the "external electrode", and the "method for producing a solid-state battery" described later can be applied except that a sintering agent containing Bi is used for forming the external electrode.

In the aspect (4), an oxide ceramic containing Bi is used as at least a part of the oxide ceramic constituting the battery element. Examples of the Bi-containing oxide ceramic include a garnet type solid electrolyte having a chemical composition represented by the following general formula (2). Such a Bi-containing oxide ceramic may be included in one or more layers selected from a positive electrode layer, a negative electrode layer, and a solid electrolyte layer as a battery element.

In the aspect (4), the Bi-containing oxide ceramic is used for formation of the battery element, whereby Bi exists between the exterior portion 2 and the external electrode 3, and Bi is intensively segregated particularly in the interface region. Although a material containing Bi (for example, each of an oxide ceramic containing Bi and a sintering agent containing Bi) is not used for formation of the exterior portion 2 and the external electrode 3, the oxide ceramic containing Bi is used for formation of the battery element, whereby Bi exists between the exterior portion 2 and the external electrode 3 due to the movement of Bi, and Bi is intensively segregated particularly in the interface region.

In the aspect (4), for the descriptions of the "exterior portion", the "battery element", the "external electrode", and the "method for producing a solid-state battery", the same descriptions as those of the "exterior portion", the "battery element", the "external electrode", and the "method for producing a solid-state battery" described later can be applied except that the oxide ceramic containing Bi is used for the formation of the battery element.

(Exterior portion)

The exterior portion 2 is a member covering the outside of the battery element 1, and has a function of covering the battery element 1 to prevent entry of moisture into the battery element 1. The exterior portion 2 typically has not only such a function but also a function of electrically, physically, and chemically protecting a battery element, and thus may also be referred to as a protective layer or a protective film. The exterior portion 2 includes a main surface exterior portion 2a (for example, a set of main surface exterior portions 2a) that covers the main surface of the battery element 1 and a side surface exterior portion 2b (for example, a set of side surface exterior portions 2b) that covers the side surface of the battery element 1. The exterior portion 2 typically has a layer form or a film form. The exterior portion 2 may be in direct contact with the surface (in particular, the main surface and/or the side surface) of the battery element 1, or may be in indirect contact with the surface with another layer (or film) interposed therebetween. From the viewpoint of more sufficiently exhibiting the effect of the present invention, it is preferable that the exterior portion 2 is in direct contact with the surface (particularly, the main surface and/or the side surface) of the battery element 1. The exterior portion 2 is in direct contact with an external electrode 3 described later at a part of its outer surface.

In the solid-state battery of the present invention, the exterior portion 2 includes a specific oxide ceramic. In the present invention, at least one of the main surface exterior portion and the side surface exterior portion may include a specific oxide ceramic. From the viewpoint of further improving the fixing strength, the moisture resistance, and the reaction resistance, it is preferable that both the main surface exterior portion and the side surface exterior portion include a specific oxide ceramic.

In the present invention, the oxide ceramic included in the exterior portion contains: Li (lithium); Mg (magnesium); and one or more elements (M) selected from the group consisting of Group 4 and Group 5 elements. Specifically, the element M is one or more elements selected from the group consisting of Ti (titanium), Zr (zirconium), Hf (hafnium), Ta (tantalum), and Nb (niobium). The element M preferably includes Ti from the viewpoint of further improving the moisture resistance, and more preferably includes only Ti or includes Ti and Zr or Ta.

In the present invention, the oxide ceramic contains Li, Mg, and the element M in combination, thereby allowing to provide an exterior portion excellent in moisture resistance and reaction resistance. When the oxide ceramic does not include Li, does not include Mg, and does not include the element M, at least one of the properties of moisture resistance and reaction resistance is deteriorated.

In the present specification, the moisture resistance is a property of preventing entry of moisture, and may be a property of being hardly affected by moisture particularly under high temperature and high humidity (for example, resistance to moisture absorption).

The reaction resistance is, unless otherwise specified, a property that the exterior portion (particularly, the oxide ceramic included in the exterior portion) hardly reacts (for example, side reaction) when fired (for example, at 800°C for 5 hours) with the solid electrolyte included in the battery element. The reaction resistance may be a property that the oxide ceramic and the solid electrolyte hardly react with each other particularly when fired together.

In the oxide ceramic, the molar ratios Li/M and Mg/M are not particularly limited, and are preferably within the following ranges from the viewpoint of further improving the fixing strength, the moisture resistance, and the reaction resistance.

Li/M

preferably, $0 < Li/M \le 5$;
more preferably, $0.8 \le Li/M \le 4.2$; and
still more preferably, $0.8 \le Li/M \le 2.1$.

Mg/M

preferably, $0.1 \le Mg/M \le 9.8$;
more preferably, $0.3 \le Mg/M \le 9.8$; and
still more preferably, $0.8 \le Mg/M \le 4.2$.

As Li/M and Mg/M in the oxide ceramic, there are used values obtained by calculating from the contents (or molar ratio) of Li, Mg, and M measured by the same method as the method for analyzing the chemical composition of the oxide ceramic described later.

The content of Mg in the oxide ceramic is typically 0 mass% or more and 58 mass% or less, particularly 1 mass% or more and 58 mass% or less, preferably 10 mass% or more and 55 mass% or less, and more preferably 20 mass% or more and 50 mass% or less with respect to the total amount of the oxide ceramic.

As the content of Mg, a value measured by emission spectroscopy using high-frequency inductively coupled plasma (ICP) as a light source is used. For example, ICP-AES (ICP emission spectrometry) may be used, or LA-ICP-MS (laser ablation ICP mass spectrometry) may be used. Specifically, ICP-AES and LA-ICP-MS are different from each other in terms of whether to form a solution or to use laser ablation in ionizing metal ions such as Mg, and are the same in that these ions are introduced into plasma and excited by plasma. In particular, in analysis from a solid state, LA-ICP-MS contributes to simple measurement. In particular, in the case of LA-ICP-MS, quantitative analysis (composition analysis) may be performed at any 10 or more locations, and an average value thereof may be calculated.

The oxide ceramic may have any chemical composition as long as it has the above molar ratio. From the viewpoint of further improving the fixing strength, the moisture resistance and the reaction resistance, the oxide ceramic preferably has a chemical composition represented by the following general formula (1).

[Chemical Formula 2] $\mathrm{Li}_{\alpha 1}A_{\alpha\mathbf{2}}A_{\alpha 2}Mg_{\beta}M_{\gamma}O_{\delta}$ (1)

In the formula (1), A is one or more elements selected from the group consisting of Na, K, Rb, Ca, Sr, Ba, Sc, Y, Mo, W, Zn, Al, Ga, Ge, Sn, Sb, and Bi.

M is one or more elements selected from the same group as the element M described above, and from the viewpoint of further improving the moisture resistance, and preferably includes one or more elements selected from the group consisting of Ti, Zr, Hf, Nb, and Ta, more preferably includes Ti, and still more preferably includes only Ti, or includes Ti and Zr or Ta.

In the formula (1), $\alpha 1/\gamma$ and $\beta/\gamma$ correspond to the above-described molar ratios Li/M and Mg/M, respectively. Therefore, $\alpha 1/\gamma$ satisfies the same range as the molar ratio Li/M described above, and from the viewpoint of further improving the fixing strength, the moisture resistance, and the reaction resistance, preferably satisfies the preferable range of Li/M, more preferably satisfies the more preferable range of Li/M, and still more preferably satisfies the further preferable range of Li/M. $\beta/\gamma$ satisfies the same range as the molar ratio Mg/M described above, and from the viewpoint of further improving the fixing strength, the moisture resistance, and the reaction resistance, preferably satisfies the preferable range of Mg/M, more preferably satisfies the more preferable range of Mg/M, and still more preferably satisfies the further preferable range of Mg/M.

$$\delta = \{\alpha 1 + a\alpha 2 + 2\beta + n\gamma\}/2$$

(n is the average valence of M, and a is the average valence of A)

Specifically, n is the average valence of M. The average valence of M is, for example, the same value as the average valence of A described above to be described later when M is recognized as n1 of elements X having a valence a+, n2 of elements Y having a valence b+, and n3 of elements Z having a valence c+.

a is an average valence of A. The average valence of A is, for example, a value represented by $(n1 \times a + n2 \times b + n3 \times c)/(n1 + n2 + n3)$ when the number of elements X having a valence of a+ is n1, the number of elements Y having a valence of b+ is n2, and the number of elements Z having a valence of c+ is n3 in the elements represented by A. The oxygen number $\delta$ may deviate from the above value by about $\pm 10\%$. That is, oxygen deficiency or interstitial oxygen may be included in part.

In the formula (1), $\alpha 1$ typically satisfies $0 < \alpha 1 < 1.0$, and from the viewpoint of further improving the fixing strength, the moisture resistance, and the reaction resistance, preferably satisfies $0.15 < \alpha 1 < 0.70$, and more preferably satisfies $0.29 \leq \alpha 1 \leq 0.50$.

$\alpha 2$ typically satisfies $0 \leq \alpha 2 \leq 1.0$, and from the viewpoint of further improving the fixing strength, moisture resistance, and reaction resistance, $\alpha 2$ preferably satisfies $0 \leq \alpha 2 \leq 0.5$ and is more preferably 0.

$\beta$ typically satisfies $0 < \beta < 1.0$, and from the viewpoint of further improving the fixing strength, the moisture resistance, and the reaction resistance, preferably satisfies $0.03 \leq \beta < 0.85$, and more preferably satisfies $0.25 \leq \beta \leq 0.60$.

$\gamma$ typically satisfies $0 < \gamma < 1.0$, and from the viewpoint of further improving the fixing strength, the moisture resistance, and the reaction resistance, preferably satisfies $0.05 < \gamma < 0.35$, and more preferably satisfies $0.14 \leq \gamma \leq 0.26$.

In particular, in the aspect (2), there is used a Bi-containing oxide ceramic having a chemical composition represented by the same general formula as that of the general formula (1) except that A includes Bi and $\alpha 2$ falls within the above-described range.

The chemical composition of the oxide ceramic can be determined by ICP analysis (inductively coupled plasma method), LA-ICP-MS (laser ablation ICP mass spectrometry) analysis, or the like. EDX (energy dispersive X-ray spectroscopy) or WDX (wavelength dispersive X-ray spectroscopy) may be used. The chemical composition may be obtained by performing quantitative analysis (composition analysis) at arbitrary 100 points of each of arbitrary 100 sintered grains and calculating the average of the resulting values.

The crystal structure of the oxide ceramic is not particularly limited, and may have, for example, a rock salt type crystal structure, a spinel type crystal structure, a layered rock salt type crystal structure, or a mixed phase structure thereof. From the viewpoint of further improving the fixing strength, the moisture resistance, and the reaction resistance, the oxide ceramic preferably has a rock salt type crystal structure and/or a spinel type crystal structure (particularly a rock salt type crystal structure or a mixed phase structure of a rock salt type crystal structure and a spinel type crystal structure), and more preferably has a rock salt type crystal structure.

The statement that the oxide ceramic has a rock salt type crystal structure means that the oxide ceramic has not only a "crystal structure of a rock salt type" but also a "crystal structure resembling a rock salt type". Specifically, the oxide ceramic has a crystal structure that can be recognized as a crystal structure of a rock salt type or resembling a rock salt type by those skilled in the art of solid-state batteries in X-ray diffraction. More specifically, the oxide ceramic may show, in X-ray diffraction, one or more main peaks corresponding to a Miller index unique to a so-called crystal structure of a rock salt type, diffraction pattern: ICDD Card No. 00-004-0829, at a predetermined incident angle, or as a crystal structure resembling a rock salt type, one or more main peaks corresponding to a Miller index unique to a so-called crystal structure of a rock salt type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a rock salt type include ICDD Card No. 00-036-0308.

The statement that the oxide ceramic has a spinel type crystal structure means that the oxide ceramic has not only a "crystal structure of a spinel type" but also a "crystal structure resembling a spinel type". Specifically, the oxide ceramic has a crystal structure that can be identified as a crystal structure of a spinel type or resembling a spinel type by those skilled in the field of solid-state batteries in X-ray diffraction. More specifically, the oxide ceramic may show, in X-ray diffraction, one or more main peaks corresponding to a Miller index unique to a so-called crystal structure of a spinel type (diffraction pattern: ICDD Card No. 01-072-6998) at a predetermined incident angle, or as a crystal structure resembling a spinel type, one or more main peaks having different incident angles (that is, peak positions or diffraction angles) and intensity ratios (that is, peak intensities or diffraction intensity ratios) due to a difference in composition from one or more main peaks corresponding to a Miller index unique to a so-called crystal structure of a spinel type.

The mixed phase structure in which the oxide ceramic has a rock salt type crystal structure and a spinel type crystal structure means that the oxide ceramic contains an oxide ceramic having both crystal structures of the rock salt type crystal structure and the spinel type crystal structure described above.

The statement that the oxide ceramic has a layered rock salt type crystal structure means that the oxide ceramic has not only a "crystal structure of a layered rock salt type" but also a "crystal structure resembling a layered rock salt type". Specifically, the oxide ceramic has a layered crystal structure that can be recognized as a crystal structure of a layered rock salt type or resembling a layered rock salt type by those skilled in the art of solid-state batteries in X-ray diffraction. More specifically, the oxide ceramic may show, in X-ray diffraction, one or more main peaks corresponding to a Miller index unique to a so-called crystal structure of a layered rock salt type, diffraction pattern: ICDD Card No. 00-033-0831, at a predetermined incident angle, or as a crystal structure resembling a layered rock salt type, one or more main peaks corresponding to a Miller index unique to a so-called crystal structure of a layered rock salt type may show one or more main peaks having different incident angles (that is, peak positions or diffraction angles) and intensity ratios (that is, peak intensities or diffraction intensity ratios) due to a difference in composition. Examples of a typical diffraction pattern of a crystal structure resembling a layered rock salt type include ICDD Card No. 00-033-0843.

The oxide ceramic may be produced by any method as long as the method can produce an oxide ceramic of the desired composition. For example, the oxide ceramic can be obtained by weighing out raw materials including a Li source, an Mg source, and an element M source so as to provide a desired composition, thoroughly mixing with water, and then firing. The firing temperature is not particularly limited, and may be, for example, 800°C or more and 1200°C or less (particularly, 850°C or less and 1100°C or less). The firing time is not particularly limited, and may be, for example, 1 hour or more and 10 hours or less (particularly 3 hours or more and 7 hours or less). As a Li source, for example, lithium carbonate ($Li_2CO_3$) can be used. As an Mg source, for example, magnesium oxide (MgO) can be used. As an element M source, for example, titanium oxide ($TiO_2$), niobium oxide ($Nb_2O_5$), zirconium oxide ($ZrO_2$), tantalum oxide ($Ta_2O_5$), and hafnium oxide ($HfO_2$) can be used. In the production of the oxide ceramic, the final composition of the obtained oxide ceramic is determined by the ratio of the Li source, Mg source, and element M source during charging. Therefore, adjusting the charging ratio of the Li source, the Mg source, and the element M source can control the above-described molar ratios Li/M and Mg/M.

The present invention does not preclude the exterior portion 2 from including another oxide ceramic in addition to the specific oxide ceramic described above. Another oxide ceramic includes an oxide including Bi. Examples thereof include a Li-Bi-O based oxide, a Li-Mg-Bi-O based oxide, $Bi_2O_3$, and a Mg-Bi-O based oxide. The content of the specific oxide ceramic in the exterior portion 2 may typically be an area percentage of 60% or more and 100% or less, and particularly an area percentage of 90% or more and 100% or less. The area percentage can be measured as follows. First, a solid-state battery is broken such that the broken surface of the ceramic exterior portion is exposed. This broken surface is polished using a cross-section polisher or the like to provide a polished surface. EDX analysis is performed on any surface in the region of the exterior portion of the polished surface, and the region in which not only Mg, element M, and element A are detected but also Li is detected by TOF-SIMS is regarded as the region of the specific oxide ceramic described above. As described above, the measurement is possible by calculating the percentage of the area of the oxide ceramic to the area of the exterior portion.

The thickness of the exterior portion 2 is typically preferably 1 $\mu$m or more and 500 $\mu$m or less, more preferably 5 $\mu$m or more and 100 $\mu$m or less, and still more preferably 5 $\mu$m or more and 50 $\mu$m or less. As the thickness of the exterior portion 2, an average thickness for the thickness at arbitrary 100 positions is used.

The relative density of the exterior portion 2 is typically 90% or more and 100% or less, and preferably 95% or more and 100% or less. The relative density of the exterior portion may be measured using the Archimedes method.

The exterior portion 2 typically has an insulating property. The insulating property is a property having neither ion conductivity nor electron conductivity. For example, the ion conductivity of the exterior portion 2 is typically $1\times10^{-7}$ S/cm or less, and particularly the ion conductivity is $1\times10^{-10}$ S/cm or less. The ion conductivity of the exterior portion 2 is typically $1\times10^{-18}$ S/cm or more. For example, the electron conductivity of the exterior portion 2 is typically $1\times10^{-7}$ S/cm or less, particularly $1\times10^{-10}$ S/cm or less. The electron conductivity of the exterior portion 2 is typically $1\times10^{-18}$ S/cm or more.

The oxygen permeability of the exterior portion 2 in the thickness direction may be, for example, $10^{-1}$ cc/m$^2$/day/atmospheric pressure or less, particularly $10^{-3}$ cc/m$^2$/day/atmospheric pressure or less.

H$_2$O permeability in the thickness direction of the exterior portion 2 may be, for example, $10^{-2}$ g/m$^2$/day or less, particularly $10^{-4}$ g/m$^2$/day or less. As the H$_2$O permeability, a value measured at 25°C by a cup method, a carrier gas method, a pressure deposition method, or a Ca corrosion method is used.

The main surface exterior portion 2a and the side surface exterior portion 2b have a form as separate members from each other (or a separate member structure) in FIG. 1, but may have a form in which the main surface exterior portion 2a and the side surface exterior portion 2b are integrated (or an integrated structure) as illustrated in FIG. 2. FIG. 2 is a schematic perspective view showing another example of a solid-state battery of the present invention. The solid-state battery of FIG. 2 is the same as the solid-state battery of FIG. 1 except that the main surface exterior portion 2a and the side surface exterior portion 2b are integrated. In the solid-state battery of FIG. 2, not only the main surface exterior portion 2a but also the side surface exterior portion 2b can be produced by using a later-described method of sticking a sheet (green sheet method). In particular, by producing the solid-state battery (in particular, the exterior portion 2) using a sheet in which a sheet corresponding to the main surface exterior portion 2a and a sheet corresponding to the side surface exterior portion 2b are continuous, production of the solid-state battery (in particular, the exterior portion 2) is significantly simplified. In this case, the oxide ceramic included in the main surface exterior portion 2a typically has the same chemical composition as the oxide ceramic included in the side surface exterior portion 2b.

When in direct contact with the surface (particularly the main surface and/or the side surface) of the battery element 1, the exterior portion 2 is preferably integrally sintered as sintered bodies together with the surface. That is, it is preferable that the exterior portion 2 is an integrally sintered body as sintered bodies together with the surface (particularly, the main surface and/or the side surface) of the battery element 1. The statement that the exterior portion 2 is integrally sintered as sintered bodies together with the surface of the battery element 1 means that the exterior portion 2 and the battery element 1 are joined by sintering. Specifically, the exterior portion 2 and the battery element 1 are sintered integrally while both being a sintered body. Not the whole of the exterior portion 2 and the battery element 1 need to be strictly integrated, and a part thereof does not have to be integrated. It is sufficient that the exterior portion 2 and the battery element 1 are integrated as a whole.

(Battery element)

The battery element 1 is a body portion of a solid-state battery covered with the exterior portion 2, and includes one or more battery constituent units. The battery constituent unit means a minimum constituent unit capable of exhibiting a battery function, and includes a set of electrode layers 1a (specifically, one positive electrode layer and one negative electrode layer facing each other) and one solid electrolyte layer 1b disposed between the set of electrode layers 1a (that is, between the positive electrode layer and the negative electrode layer). The battery element 1 may have a single battery structure having only one battery constituent unit, or may have a multi-battery structure in which two or more battery constituent units are stacked along a stacking direction of each layer constituting each battery constituent unit. The electrode layer includes the positive electrode layer and the negative electrode layer. The battery element 1 typically has an insulating portion 1c for ensuring electrical non-contact between one electrode layer and an external electrode for drawing current from the other electrode layer to the outside. For example, the battery element 1 has an insulating portion 1c for ensuring electrical non-contact between the positive electrode layer and an external electrode (that is, an external negative electrode) for drawing current from the negative electrode layer to the outside. In addition, for example, the battery element 1 has an insulating portion 1c for ensuring electrical non-contact between the negative electrode layer and an external electrode (that is, an external negative electrode) for drawing current from the positive electrode layer to the outside. As shown in FIG. 1, the battery element typically has a solid electrolyte layer 1b on the top layer and bottom layer of the battery element.

The battery element typically includes a solid electrolyte (hereinafter, may be referred to as a first solid electrolyte). The first solid electrolyte included in the battery element may have any crystal structure, for example, a garnet type crystal structure, a LISICON type crystal structure, a perovskite type crystal structure, or a mixed phase structure thereof. From the viewpoint of further improving the fixing strength, the moisture resistance, and the reaction resistance, the first solid electrolyte included in the battery element preferably has a garnet type crystal structure, a LISICON type crystal structure, or a mixed phase structure thereof, and more preferably has a garnet type crystal structure.

When the battery element includes such a first solid electrolyte, the first solid electrolyte may be included in one or more layers selected from a positive electrode layer, a negative electrode layer, and a solid electrolyte layer. From the viewpoint of further improving the fixing strength, the moisture resistance, and the reaction resistance, it is preferable that such a first solid electrolyte is included at least in the solid electrolyte layer.

The fact that the solid electrolyte has a garnet type crystal structure means, in an encompassing manner, that the solid electrolyte not only simply has a "crystal structure of a garnet type", but also has a "crystal structure resembling a garnet type". Specifically, the solid electrolyte has a crystal structure that can be identified as a crystal structure of a garnet type or resembling a garnet type by those skilled in the field of solid-state batteries in X-ray diffraction. More specifically, the solid electrolyte may show, in X-ray diffraction, one or more main peaks corresponding to a Miller index unique to a so-called crystal structure of a garnet type, diffraction pattern: ICDD Card No. 422259), at a predetermined incident angle, or as a crystal structure resembling a garnet type, one or more main peaks having different incident angles (that is, peak positions or diffraction angles) and intensity ratios (that is, peak intensities or diffraction intensity ratios) due to a difference in composition from one or more main peaks corresponding to a Miller index unique to a so-called crystal structure of a garnet type. Examples of a typical diffraction pattern of a crystal structure resembling a garnet type include ICDD Card No. 00-045-0109.

The solid electrolyte having a garnet type crystal structure may have any chemical composition. The garnet type solid electrolyte has, for example, a chemical composition represented by the following general formula (2).

[Chemical Formula 3] $\quad$ $(Li_p A^1_y)(La_{\beta - z} B^1_z)(D^1_{\gamma - x} Bi_x)O_{12 - \delta}$ (2)

In the formula (2), $A^1$ represents a metal element occupying a Li site in a garnet type crystal structure. $A^1$ typically represents one or more elements selected from the group consisting of gallium (Ga), aluminum (Al), magnesium (Mg), zinc (Zn), and scandium (Sc). $A^1$ is preferably one or more elements selected from the group consisting of gallium (Ga) and aluminum (Al), and more preferably two elements of Ga and Al from the viewpoint of further improving the fixing strength, the moisture resistance, and reaction resistance.

In the formula (2), $B^1$ represents a metal element occupying a La site in the garnet type crystal structure. $B^1$ typically represents one or more elements selected from the group consisting of calcium (Ca), strontium (Sr), barium (Ba), and lanthanoid elements. Examples of the lanthanoid elements include cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu).

In the formula (2), $D^1$ refers to a metal element occupying the six-coordination site in the garnet type crystal structure. The six-coordination site in the garnet type crystal structure is, for example, a site occupied by Nb in $Li_5La_3Nb_2O_{12}$ (ICDD Card No. 00-045-0109) having a garnet type crystal structure, and a site occupied by Zr in $Li_7La_3Zr_2O_{12}$ (ICDD Card. No 01-078-6708) having a garnet type crystal structure. $D^1$ represents one or more elements selected from the group consisting of transition elements capable of being six-coordinate with oxygen and typical elements belonging to Groups 12 to 15. Examples of the transition elements capable of being six-coordinate with oxygen include scandium (Sc), zirconium (Zr), titanium (Ti), tantalum (Ta), niobium (Nb), hafnium (Hf), molybdenum (Mo), tungsten (W), and tellurium (Te). Examples of the typical elements belonging to Groups 12 to 15 include indium (In), germanium (Ge), tin (Sn), lead (Pb), antimony (Sb), and bismuth (Bi). $D^1$ is typically one or more elements selected from the group consisting of Zr (zirconium), Sn (tin), Sb (antimony), Ti (titanium), Ta (tantalum), Nb (niobium), Hf (hafnium), Mo (molybdenum), W (tungsten), and Te (tellurium), and from the viewpoint of further improving the fixing strength, the moisture resistance, and the reaction resistance, preferably includes one or more elements selected from the group consisting of Zr (zirconium), Ta (tantalum), and Nb (niobium), and more preferably includes Zr (zirconium).

In the formula (2), x satisfies $0 \leq x \leq 1.00$, and from the viewpoint of further improving the fixing strength, the moisture resistance, and the reaction resistance, preferably satisfies $0 \leq x \leq 0.70$, more preferably $0 \leq x \leq 0.40$, still more preferably $0 \leq x \leq 0.40$, and particularly preferably $0 \leq x \leq 0.20$.

y satisfies $0 \leq y \leq 0.50$, and from the viewpoint of further improving the fixing strength, the moisture resistance, and the reaction resistance, y preferably satisfies $0 \leq y \leq 0.40$, more preferably $0 \leq y \leq 0.30$, and still more preferably $0 \leq y \leq 0.20$.

β satisfies $2.5 \leq \beta \leq 3.5$, and from the viewpoint of further improving the fixing strength, the moisture resistance, and the reaction resistance, preferably $2.7 \leq \beta \leq 3.3$, more preferably $2.8 \leq \beta \leq 3.2$, and still more preferably $2.9 \leq \beta \leq 3.1$.

z satisfies $0 \leq z \leq 2.00$, and from the viewpoint of further improving the fixing strength, the moisture resistance, and the reaction resistance, preferably satisfies $0 \leq z \leq 1.00$, more preferably $0 \leq z \leq 0.50$, and still more preferably 0.

y satisfies $1.5 \leq \gamma \leq 2.5$, and from the viewpoint of further improving the fixing strength, the moisture resistance, and the reaction resistance, preferably $1.7 \leq \gamma \leq 2.3$, more preferably $1.8 \leq \gamma \leq 2.2$, and still more preferably $1.9 \leq \gamma \leq 2.0$.

In the formula (2), p typically satisfies $6.0 \leq p \leq 7.0$, and from the viewpoint of further improving the fixing strength, the moisture resistance and the reaction resistance, preferably satisfies $6.0 \leq p \leq 6.6$, more preferably $6.25 \leq p \leq 6.55$.

a is the average valence of $A^1$. The average valence of $A^1$ is, for example, a value represented by $(n1 \times a + n2 \times b + n3 \times c) / (n1 + n2 + n3)$ in a case where the number of elements X having a valence of a+ is n1, the number of elements Y having a valence of b+ is n2, and the number of elements Z having a valence of c+ is n3 in the elements represented by $A^1$.

b is the average valence of $B^1$. The average valence of $B^1$ is, for example, the same value as the above-described average valence of $A^1$ in a case where the number of elements X having a valence of a+ is n1, the number of elements Y having a valence of b+ is n2, and the number of elements Z having a valence of c+ is n3 in the elements represented by $B^1$.

c is the average valence of $D^1$. The average valence of $D^1$ is, for example, the same value as the average valence of $A^1$ mentioned above when $D^1$ is recognized as n1 elements X with a valence a+, n2 elements Y with a valence b+, and n3 elements Z with a valence c+.

$\delta$ represents an oxygen deficiency amount, and may be 0. $\delta$ may typically satisfy $0 \leq \delta < 1$. The oxygen deficiency amount $\delta$ cannot be quantitatively analyzed using the latest device, and therefore may be regarded as 0.

The molar ratio of each element in the chemical composition of the solid electrolyte ceramic of the present invention does not necessarily coincide with, for example, the molar ratio of each element in the general formula (2), and tends to deviate from this molar ratio according to the analysis method, but an effect of the present invention is exhibited as long as the compositional deviation does not change the properties.

In the present invention, the chemical composition of the solid electrolyte ceramic may be the composition of the whole ceramic material determined using an inductively coupled plasma method (ICP). The chemical composition may be measured and calculated using inductively coupled plasma atomic emission spectrometry (ICP-AES) or laser ablation inductively coupled plasma mass spectrometry (LA-ICP-MS). The chemical composition may be measured and calculated using XPS analysis, or may be determined using energy dispersive X-ray spectroscopy (TEM-EDX) and/or wavelength dispersive X-ray spectroscopy (WDX). The chemical composition may be obtained by performing quantitative analysis (composition analysis) at arbitrary 100 points of each of arbitrary 100 sintered grains and calculating the average of the resulting values.

Specific examples of the garnet type solid electrolyte represented by the general formula (2) include $Li_{6.6}La_3Zr_{1.6}Ta_{0.4}O_{12}$, $Li_{6.4}Ga_{0.05}Al_{0.15}La_3Zr_2O_{12}$, $Li_{6.75}La_3Zr_{1.75}Nb_{0.25}O_{12}$, and $Li_{6.53}La_3Zr_{1.53}Ta_{0.4}Bi_{0.07}O_{12}$.

The LISICON type crystal structure of the solid electrolyte encloses a $\beta_I$ structure, a $\beta_{II}$ type structure, a $\beta_{II}$' type structure, a $T_I$ type structure, a $T_{II}$ type structure, a $\gamma_{II}$ type structure, and a $\gamma_0$ type structure. That is, the LISICON type solid electrolyte may include one or more solid electrolytes having a $\beta_I$ structure, a $\beta_{II}$ type structure, a $\beta_{II}$' type structure, a $T_I$ type structure, a $T_{II}$ type structure, a $\gamma_{II}$ type structure, a $\gamma_0$ type structure, or a composite structure thereof. The LISICON type structure of the solid electrolyte is preferably a $\gamma_{II}$ type structure from the viewpoint of further improving the fixing strength, the moisture resistance, and the reaction resistance.

The fact that the solid electrolyte has a $\gamma_{II}$ type structure means that the solid electrolyte has a $\gamma_{II}$ type crystal structure, and in a broad sense, means having a crystal structure that can be recognized as a $\gamma_{II}$ type crystal structure by those skilled in the field of solid-state batteries. In a narrow sense, the fact that the solid electrolyte has a $\gamma_{II}$ type structure means that the solid electrolyte shows one or more main peaks corresponding to a Miller index unique to a so-called $\gamma_{II}$-$Li_3VO_4$ type crystal structure at a predetermined incident angle in X-ray diffraction. The compound that has a $\gamma_{II}$ type structure (that is, solid electrolyte) is described, for example, in the document "J. solid state chem" (A. R. West et.al, J. solid state chem., 4, 20-28 (1972)), and examples thereof include ICDD Card No. 01-073-2850.

The fact that the solid electrolyte has a $\beta_I$ type structure means that the solid electrolyte has a $\beta_I$ type crystal structure, and in a broad sense, means having a crystal structure that can be recognized as a $\beta_I$ type crystal structure by those skilled in the field of solid-state batteries. In a narrow sense, the fact that the solid electrolyte has a $\beta_I$ type structure means that the solid electrolyte shows one or more main peaks corresponding to a Miller index unique to a so-called $\beta_I$-$Li_3VO_4$ type crystal structure at a predetermined incident angle in X-ray diffraction. The compound that has a $\beta_I$ type structure (that is, solid electrolyte) is described, for example, in the document "J. solid state chem" (A. R. West et.al, J. solid state chem., 4, 20-28 (1972)), and as an example thereof, the following table shows, for example, the XRD data (the d-value of plane spacing and the corresponding Miller indices) listed therein.

[Table 1]

| $Li_2CoSiO_4$ $\beta_t$, 25°C | | |
|---|---|---|
| d(A) | I | h k l |
| 5.4 | 80 | 110 |
| 4.08 | 60 | 120 |

(continued)

| Li$_2$CoSiO$_4$ β$_t$, 25°C | | |
|---|---|---|
| d(A) | I | h k l |
| 3.88 | 60 | 101 |
| 3.65 | 100 | 111, 021 |
| 3.14 | 20 | 200, 121 |
| 3.10 | 40 | 130 |
| 2.71 | 80 | 220 |
| 2.68 | 60 | 040 |
| 2.47 | 80 | 002 |
| 2.38 | 60 | 221 |
| 2.36 | 20 | 041 |

The fact that the solid electrolyte has a β$_{II}$ type structure means that the solid electrolyte has a β$_{II}$ type crystal structure, and in a broad sense, means having a crystal structure that can be recognized as a β$_{II}$ type crystal structure by those skilled in the field of solid-state batteries. In a narrow sense, the fact that the solid electrolyte has a β$_{II}$ type structure means that the solid electrolyte shows one or more main peaks corresponding to a Miller index unique to a so-called β$_{II}$-Li$_3$VO$_4$ type crystal structure at a predetermined incident angle in X-ray diffraction. The compound that has a β$_{II}$ type structure (that is, solid electrolyte) is described, for example, in the document "J. solid state chem" (A. R. West et.al, J. solid state chem., 4, 20-28 (1972)), and examples thereof include ICDD Card No. 00-024-0675.

The fact that the solid electrolyte has a β$_{II}$' type structure means that the solid electrolyte has a β$_{II}$' type crystal structure, and in a broad sense, means having a crystal structure that can be recognized as a β$_{II}$' type crystal structure by those skilled in the field of solid-state batteries. In a narrow sense, the fact that the solid electrolyte has a β$_{II}$' type structure means that the solid electrolyte shows one or more main peaks corresponding to a Miller index unique to a so-called β$_{II}$'-Li$_3$VO$_4$ type crystal structure at a predetermined incident angle in X-ray diffraction. The compound that has a β$_{II}$' type structure (that is, solid electrolyte) is described, for example, in the document "J. solid state chem" (A. R. West et.al, J. solid state chem., 4, 20-28 (1972)), and as an example thereof, the following table shows, for example, the XRD data (the d-value of plane spacing and the corresponding Miller indices) listed therein.

[Table 2]

| Li$_2$CoGeO$_4$ β$_r$, 25°C | | |
|---|---|---|
| d(A) | I | h k l |
| | | 010 |
| 4.17 | 80 | 110 |
| 3.96 | 80 | 101 |
| 3.70 | 10 | 011 |
| 3.20 | 20 | 200, 111 |
| 2.75 | 100 | 210 |
| 2.74 | 60 | 020 |
| 2.50 | 80 | 002 |
| | | 120 |

The fact that the solid electrolyte has a T$_I$ type structure means that the solid electrolyte has a T$_I$ type crystal structure, and in a broad sense, means having a crystal structure that can be recognized as a T$_I$ type crystal structure by those skilled in the field of solid-state batteries. In a narrow sense, the fact that the solid electrolyte has a T$_I$ type structure means that the solid electrolyte shows one or more main peaks corresponding to a Miller index unique to a so-called T$_I$-Li$_3$VO$_4$ type crystal structure at a predetermined incident angle in X-ray diffraction. The compound that has a T$_I$ type structure (that is, solid electrolyte) is described, for example, in the document "J. solid state chem" (A. R. West et.al, J. solid state chem., 4, 20-28 (1972)), and examples thereof include ICDD Card No. 00-024-0668.

The fact that the solid electrolyte has a T$_{II}$ type structure means that the solid electrolyte has a T$_{II}$ type crystal structure, and in a broad sense, means having a crystal structure that can be recognized as a T$_{II}$ type crystal structure by those skilled in the field of solid-state batteries. In a narrow sense, the fact that the solid electrolyte has a T$_{II}$ type structure means that the solid electrolyte shows one or more main peaks corresponding to a Miller index unique to a so-called

$T_{II}$-$Li_3VO_4$ type crystal structure at a predetermined incident angle in X-ray diffraction. The compound that has a $T_{II}$ type structure (that is, solid electrolyte) is described, for example, in the document "J. solid state chem" (A. R. West et.al, J. solid state chem., 4, 20-28 (1972)), and examples thereof include ICDD Card No. 00-024-0669.

The fact that the solid electrolyte has a $\gamma_0$ type structure means that the solid electrolyte has a $\gamma_0$ type crystal structure, and in a broad sense, means having a crystal structure that can be recognized as a $\gamma_0$ type crystal structure by those skilled in the field of solid-state batteries. In a narrow sense, the fact that the solid electrolyte has a $\gamma_0$ type structure means that the solid electrolyte shows one or more main peaks corresponding to a Miller index unique to a so-called $\gamma_0$-$Li_3VO_4$ type crystal structure at a predetermined incident angle in X-ray diffraction. The compound that has a $\gamma_0$ type structure (that is, solid electrolyte) is described, for example, in the document "J. solid state chem" (A. R. West et.al, J. solid state chem., 4, 20-28 (1972)), and as an example thereof, the following table shows, for example, the XRD data (the d-value of plane spacing and the corresponding Miller indices) listed therein.

[Table 3]

| $Li_2CoSiO_4$ $\gamma_0$, 25°C | | |
|---|---|---|
| $d(\lambda)$ | $I$ | $h\ k\ l$ |
| 5.4 | 60 | 110,020 |
| 4.08 | 80 | 120 |
| 3.92 | 60 | 101 |
| 3.69 | 20 | 111, 021 |
| 3.67 | 100 | |
| 3.16 | 20 | 121 |
| 3.10 | 60 $\left.\begin{array}{c}20\\20\end{array}\right\}$ $\left.\begin{array}{c}20\\20\end{array}\right\}$ | 200, 130, 210 |
| 2.90 | 20 | 031 |
| 2.71 | 100 | 220 |
| 2.68 | 60 | 040 |
| 2.65 | | 131 |
| 2.64 | | |
| 2.59 | | 211 |
| 2.57 | | |
| 2.51, | 100 | 002 |

The solid electrolyte having a LISICON type crystal structure may have any chemical composition. The LISICON type solid electrolyte has, for example, a chemical composition represented by the following general formula (3).

[Chemical Formula 4]

$$(Li_{[3 - a x + (5 - b)(1 - y)]} A_x)(V_y B_{1 - y}) O_4 \quad (3)$$

In the formula (3), A is one or more elements selected from the group consisting of Na (sodium), K (potassium), Mg (magnesium), Ca (calcium), Al (aluminum), Ga (gallium), Zn (zinc), Fe (iron), Cr (chromium), and Co (cobalt).

B is one or more elements selected from the group consisting of Zn (zinc), Al (aluminum), Ga (gallium), Si (silicon), Ge (germanium), Sn (tin), P (phosphorus), As (arsenic), Ti (titanium), Mo (molybdenum), W (tungsten), Fe (iron), Cr (chromium), and Co (cobalt), and from the viewpoint of further improving the fixing strength, the moisture resistance, and the reaction resistance, preferably one or more elements selected from the group consisting of Si (silicon) and P (phosphorus), and more preferably Si (silicon) or P (phosphorus).

x has a relationship of $0 \le x \le 1.0$, particularly $0 \le x \le 0.2$, and from the viewpoint of further improving the fixing strength, the moisture resistance, and the reaction resistance, preferably a relationship of $0 \le x \le 0.1$, and more preferably 0.

y has a relationship of $0 \le y \le 1.0$, and from the viewpoint of further improving the fixing strength, the moisture resistance, and the reaction resistance, preferably a relationship of $0 \le y \le 0.85$.

a is an average valence of A. The average valence of A is, for example, a value represented by $(n1 \times a + n2 \times b + n3 \times c)/(n1 + n2 + n3)$ when the number of elements X having a valence of $a+$ is n1, the number of elements Y having a valence of $b+$ is n2, and the number of elements Z having a valence of $c+$ is n3 in the elements represented by A.

b is an average valence of B. The average valence of B is, for example, the same value as the average valence of A described above when B is recognized as n1 of elements X having a valence $a+$, n2 of elements Y having a valence $b+$, and n3 of elements Z having a valence $c+$.

Specific examples of the LISICON type solid electrolyte represented by the general formula (3) include $Li_{3.2}V_{0.8}Si_{0.2}O_4$ and $Li_{3.5}P_{0.5}Si_{0.5}O_4$.

The fact that the solid electrolyte has a perovskite type crystal structure means, in an encompassing manner, that the solid electrolyte not only simply has a "crystal structure of a perovskite type", but also has a "crystal structure resembling a perovskite type". Specifically, the solid electrolyte has a crystal structure that can be identified as a crystal structure of a perovskite type or resembling a perovskite type by those skilled in the field of solid-state batteries in X-ray diffraction. More specifically, the solid electrolyte may show, in X-ray diffraction, one or more main peaks corresponding to a Miller index unique to a so-called crystal structure of a perovskite type (diffraction pattern: ICDD Card No. 00-046-0465) at a predetermined incident angle, or as a crystal structure resembling a perovskite type, one or more main peaks having different incident angles (that is, peak positions or diffraction angles) and intensity ratios (that is, peak intensities or diffraction intensity ratios) due to a difference in composition from one or more main peaks corresponding to a Miller index unique to a so-called crystal structure of a perovskite type. Examples of a typical diffraction pattern of a crystal structure resembling a perovskite type include ICDD Card No. 00-046-0466.

The solid electrolyte having a perovskite type crystal structure may have any chemical composition. The perovskite type solid electrolyte has, for example, a chemical composition represented by the following general formula (3).

$$[\text{Chemical Formula 5}] \qquad Li_{3x}La_{2/3-x}TiO_3 \quad (4)$$

It is preferable to have an average chemical composition represented by the above formula.

In the formula (4), x preferably satisfies $0.09 < x < 0.167$. Further, it is more preferable that $0.10 < x < 0.12$.

Specific examples of the perovskite type solid electrolyte represented by the general formula (4) include $Li_{0.35}La_{0.55}TiO_3$ and $Li_{0.5}La_{0.5}TiO_3$ .

The chemical composition of the solid electrolyte means the average value of the chemical composition of the solid electrolyte in the thickness direction of the layer containing the solid electrolyte (for example, the solid electrolyte layer). The average chemical composition of the solid electrolyte can be analyzed and measured by breaking the solid-state battery and performing composition analysis by energy-dispersive X-ray spectroscopy (EDX) using SEM-EDX in a field of view in which the entire layer fits in the thickness direction.

The solid electrolyte may be obtained by the same method as in the case of the oxide ceramic except that a raw material compound containing a predetermined metal atom is used, or may be obtained as a commercially available product.

From the viewpoint of suppressing deterioration of the battery in a longer period of time, it is preferable that all the layers constituting the battery element 1 be integrally sintered as sintered bodies together between two adjacent layers. The statement that all the layers are integrally sintered as sintered bodies together between two adjacent layers means that the two adjacent layers are joined by sintering. Specifically, both the two adjacent layers are sintered bodies and further integrally sintered. Not the whole of the two adjacent layers needs to be strictly integrated, and a portion thereof does not have to be integrated. Two adjacent layers may be integrated as a whole. For example, the positive electrode layer 1a, the solid electrolyte layer 1b, and the negative electrode layer 1a are preferably integrally sintered in a predetermined stacking order.

· Positive electrode layer and negative electrode layer

The positive electrode layer is a so-called positive electrode active material layer and may additionally include the positive electrode current collecting layer. When the positive electrode layer has the positive electrode current collecting layer, the positive electrode layer may be provided on one side or on both sides of the positive electrode current collecting layer. The positive electrode layer is formed of a sintered body containing positive electrode active material grains and may be typically formed of a sintered body including positive electrode active material grains, electron conductive material grains, and solid electrolyte grains contained in the solid electrolyte layer. The positive electrode layer (particularly the positive electrode active material layer) may include the first solid electrolyte described above.

The negative electrode layer is a so-called negative electrode active material layer and may additionally include the negative electrode current collecting layer. When the negative electrode layer has the negative electrode current collecting layer, the negative electrode layer may be provided on one side or on both sides of the negative electrode current collecting layer. The negative electrode layer is formed of a sintered body including negative electrode active material grains and may be formed of a sintered body including negative electrode active material grains, electron conductive material grains, and solid electrolyte grains contained in the solid electrolyte layer. The negative electrode layer (particularly the negative electrode active material layer) may include the first solid electrolyte described above.

The positive electrode active material contained in the positive electrode layer and the negative electrode active material contained in the negative electrode layer are substances involved in the transfer of electrons in the solid-state battery, and ions contained in the solid electrolyte material constituting the solid electrolyte layer move (conduct) between the positive electrode and the negative electrode to transfer electrons, whereby charging and discharging are performed. The positive electrode layer and the negative electrode layer may be layers particularly capable of occluding and releasing lithium ions. That is, the solid-state battery according to the present invention may be a solid-state secondary battery in which lithium ions move between the positive electrode and the negative electrode with the solid electrolyte layer interposed therebetween to charge and discharge the battery.

The positive electrode active material included in the positive electrode layer is not particularly limited, and examples thereof include at least one selected from the group consisting of a lithium-containing phosphoric acid compound having a NASICON type structure, a lithium-containing phosphoric acid compound having an olivine type structure, a lithium-containing layered oxide, a lithium-containing oxide having a spinel type structure, and the like. One example of the lithium-containing phosphoric acid compound having a NASICON type structure includes $Li_3V_2(PO_4)_3$. Examples of the lithium-containing phosphoric acid compound having an olivine type structure include $Li_3Fe_2(PO_4)_3$ and $LiMnPO_4$. Examples of the lithium-containing layered oxide include $LiCoO_2$ and $LiCo_{1/3}Ni_{1/3}Mn_{1/3}O_2$. Examples of the lithium-containing oxide having a spinel-type structure include $LiMn_2O_4$ and $LiNi_{0.5}Mn_{1.5}O_4$.

The negative electrode active material included in the negative electrode layer is not particularly limited, and examples thereof include at least one selected from the group consisting of an oxide containing at least one element selected from the group consisting of Ti, Si, Sn, Cr, Fe, Nb, and Mo, a graphite-lithium compound, a lithium alloy, a lithium-containing phosphoric acid compound having a NASICON type structure, a lithium-containing phosphoric acid compound having an olivine type structure, a lithium-containing oxide having a spinel type structure, and an oxide having a $\beta$-$Li_3VO_4$ type structure or a $\gamma$-$Li_3VO_4$ type structure. Examples of the lithium alloys include Li-Al. One example of the lithium-containing phosphoric acid compound having a NASICON type structure includes $Li_3V_2(PO_4)_3$. One example of the lithium-containing phosphoric acid compound having an olivine type structure includes $Li_3Fe_2(PO_4)_3$. Examples of the lithium-containing oxides that have a spinel type structure include $Li_4Ti_5O_{12}$. Examples of the negative electrode active material having a $\beta$-$Li_3VO_4$ type structure include $Li_3VO_4$. Examples of the oxide having a $\gamma$-$Li_3VO_4$ type structure include $Li_{3.2}V_{0.8}Si_{0.2}O_4$.

The electron conductive material included in the positive electrode layer and the negative electrode layer is not particularly limited, and examples thereof include a metal material such as silver, palladium, gold, platinum, aluminum, copper, or nickel, and a carbon material. In particular, carbon is preferable because carbon hardly reacts with the positive electrode active material, the negative electrode active material, and the solid electrolyte material, and has an effect of reducing the internal resistance of the solid-state battery.

The solid electrolyte material included in the positive electrode layer and the negative electrode layer may be selected from, for example, the same materials as the solid electrolyte material that can be included in the solid electrolyte layer described later.

The positive electrode layer and the negative electrode layer may each independently include a sintering agent. The sintering agent included in the positive electrode layer and the negative electrode layer is not particularly limited, and may be, for example, at least one selected from the group consisting of lithium oxide, sodium oxide, potassium oxide, boron oxide, silicon oxide, bismuth oxide, and phosphorus oxide. In particular, in the aspects (1) to (3), the sintering agent included in the positive electrode layer and the negative electrode layer may include a bismuth-containing sintering agent. The bismuth-containing sintering agent may be selected from the same bismuth-containing sintering agent as the bismuth-containing sintering agent included in the external electrode in the aspect (3).

Thicknesses of the positive electrode layer and the negative electrode layer are not particularly limited, and may be each independently, for example, 2 $\mu$m or more and 50 $\mu$m or less, particularly 5 $\mu$m or more and 30 $\mu$m or less.

Solid electrolyte layer

The solid electrolyte layer may include a sintering agent. The sintering agent included in the solid electrolyte layer may be selected from, for example, the same materials as the sintering agent that can be included in the positive electrode layer and the negative electrode layer. In particular, in the aspects (1) to (3), the sintering agent included in the solid electrolyte layer may include a bismuth-containing sintering agent. The bismuth-containing sintering agent may be selected from the same bismuth-containing sintering agent as the bismuth-containing sintering agent included in the external electrode in the aspect (3).

A thickness of the solid electrolyte layer is not particularly limited, and may be, for example, 1 $\mu$m or more and 15 $\mu$m or less, particularly 1 $\mu$m or more and 5 $\mu$m or less.

(External electrode)

The external electrode 3 is a member for drawing electric power (in particular, current) generated in the battery element 1 to the outside. The external electrode 3 includes a positive electrode side external electrode and a negative electrode side external electrode, and may be in direct contact with the surface of the exterior portion 2 (particularly, a part thereof). In the aspect (1) described above, when a Bi-containing layer is formed as a bonding layer at least in a region in which an external electrode is formed on the surface of the exterior portion, the external electrode 3 may be in indirect contact with the surface of the exterior portion 2 (particularly, a part thereof) via the Bi-containing layer. In this case, the Bi-containing layer is in direct contact with the exterior portion and the external electrode on each of one surface and the other surface thereof. The external electrode 3 preferably has a form of a sintered body from the viewpoints of reducing the production cost of the solid-state battery by integral firing and reducing the internal resistance of the solid-state battery.

When having the form of a sintered body, the external electrode 3 may be formed of, for example, a sintered body including electron conductive material particles and a sintering agent. The electron conductive material included in the external electrode 3 may be selected from, for example, the same materials as the electron conductive material that can be included in the positive electrode layer and the negative electrode layer. The electron conductive material of the external electrode is preferably a metal material (in particular silver, copper, palladium, alloys thereof (in particular Ag-Pd)), more preferably silver, from the viewpoint of further improving the fixing strength between the exterior portion and the external electrode, the moisture resistance, and the reaction resistance. The sintering agent included in the external electrode 3 may be selected from, for example, the same materials as the sintering agent that can be included in the positive electrode layer and the negative electrode layer. In particular, in the aspect (3), the sintering agent included in the external electrode includes a bismuth-containing sintering agent. The bismuth-containing sintering agent included in the external electrode in the aspect (3) is the bismuth-containing sintering agent described above in the description of the aspect (3). In the aspects (1) to (2), the sintering agent included in the external electrode may include a bismuth-containing sintering agent. In the aspects (1) to (2), the bismuth-containing sintering agent included in the external electrode may be selected from bismuth-containing sintering agents similar to the bismuth-containing sintering agents included in the external electrode in the aspect (3).

In the aspects (1) to (2), the electron conductive material of the external electrode 3 preferably includes Ag (silver), and more preferably is composed only of Ag, from the viewpoint of further improving the fixing strength and more sufficiently preventing the reaction between the exterior portion (particularly, oxide ceramics) and the external electrode. The fact that the electron conductive material of the external electrode 3 is composed only of Ag means that the electron conductive material other than Ag is not included. In the aspects (1) and (2), the content of the electron conductive material other than Ag in the electron conductive material of the external electrode 3 is 2 vol% or less, particularly 0.5 vol% or less with respect to the total amount of the external electrodes. In particular, the external electrode 3 preferably includes a sintering agent from the viewpoint of further improving the fixing strength. The content of the sintering agent in the external electrode 3 is 1 vol% or less, and particularly 0.1 vol% or less with respect to the total amount of the external electrode from the viewpoint of more sufficiently preventing the reaction between the exterior portion (particularly, oxide ceramics) and the external electrode.

In the aspect (3), the external electrode 3 includes the electron conductive material and the sintering agent (particularly bismuth-containing glass (for example, B-Si-Bi-O glass)) described above, and preferably includes Ag (silver) and the sintering agent (particularly bismuth-containing glass (for example, B-Si-Bi-O glass)) from the viewpoint of further improving the fixing strength and more sufficiently preventing the reaction between the exterior portion (particularly, the oxide ceramic) and the external electrode. In the aspect (3), the content of the sintering agent in the external electrode 3 is typically 1 vol% or more with respect to the total amount of the external electrodes, and is preferably 10 vol% or more, and more preferably 15 vol% or more from the viewpoint of further improving the fixing strength and more sufficiently preventing the reaction between the exterior portion (particularly oxide ceramics) and the external electrodes.

The total content (vol%) of the sintering agent in the external electrode 3 can be measured and calculated by the following method.

The solid-state battery on which the external electrode was formed was subjected to cross section polisher (CP) processing, and a porcelain structure image was obtained by SEM observation. At that time, EDX analysis was performed, and a portion where Ag was detected was defined as a portion of the external electrode, and a portion in which Bi or Si was detected was defined as a portion of the sintering agent. The area ratio of the sintering agent in the external electrode can be measured by calculating the area ratio of the above portions. Image processing software "A-Zou Kun" was used to calculate the area ratio.

[Method for producing solid-state battery]

A method for producing the solid-state battery of the present invention includes:

a step of forming an unfired stacked body; and
a step of firing the unfired stacked body.

## EP 4 738 550 A1

(Step of forming unfired stacked body)

The unfired stacked body can be produced by a printing method such as a screen printing method, a green sheet method using a green sheet, an immersion method, or a composite method thereof, but is obviously not limited to these methods.

For example, the solid electrolyte layer and the main surface exterior portion are produced by a green sheet method. An electrode layer (positive electrode layer and/or negative electrode layer) and an insulating portion are formed on the obtained solid electrolyte layer sheet by a printing method. After the solid electrolyte layer sheet on which the electrode layer and the like are printed and the main surface exterior portion sheet are stacked in a predetermined order, the side surface exterior portion is formed by an immersion method. Thereafter, the external electrode is formed by an immersion method. As a result, the unfired stacked body is formed.

(Firing step)

The unfired stacked body is subjected to firing. The firing is performed by removing an organic material at, for example, 500°C in a nitrogen gas atmosphere including oxygen gas, and then heating is performed at, for example, 550°C or more and 1300°C or less.

The present invention as described above encompasses the following preferable aspects.

<1> A solid-state battery including a battery element, an exterior portion present on an outer surface of the battery element, and an external electrode in contact with the exterior portion, in which
the exterior portion includes an oxide ceramic containing:

Li (lithium);
Mg (magnesium); and
one or more elements (M) selected from the group consisting of Group 4 and Group 5 elements, and
Bi (bismuth) exists between the exterior portion and the external electrode.

<2> The solid-state battery according to <1>, in which the external electrode includes Ag (silver).

<3> The solid-state battery according to <1> or <2>, in which the external electrode is composed only of Ag.

<4> The solid-state battery according to any one of <1> to <3>, in which the oxide ceramic has a rock salt type crystal structure.

<5> The solid-state battery according to any one of <1> to <4>, in which the exterior portion has a layer form.

<6> The solid-state battery according to any one of <1> to <5>, in which the exterior portion is in direct contact with a surface of the battery element.

<7> The solid-state battery according to any one of <1> to <6>, in which the battery element includes a garnet type solid electrolyte.

<8> The solid-state battery according to <7>, in which

the battery element includes one or more battery constituent units including a positive electrode layer and a negative electrode layer facing each other and a solid electrolyte layer disposed between the positive electrode layer and the negative electrode layer, and
the solid electrolyte is included in one or more layers selected from the positive electrode layer, the negative electrode layer, and the solid electrolyte layer.

<9> The solid-state battery according to any one of <1> to <8>, in which the Bi (bismuth) is segregated between the exterior portion and the external electrode.

<10> The solid-state battery according to <9>, in which a portion where the Bi (bismuth) is segregated has a width of 1 to 100 nm.

Hereinafter, the present invention will be described in more detail on the basis of specific examples, but the present invention is not limited to the following examples and can be appropriately changed and implemented without changing the gist of the present invention.

EXAMPLES

<Examples 1 to 4 and Comparative Examples 1 to 3>

Example 1 includes Examples 1-1 to 1-3, and the chemical compositions and thicknesses of the Bi-containing layers are different from each other (refer to Table 4).

Example 2 includes Examples 2-1 to 2-3, and the chemical compositions and thicknesses of the Bi-containing layers are different from each other (refer to Table 4).

Example 3 includes Examples 3-1 to 3-3, and the chemical compositions and thicknesses of the Bi-containing layers are different from each other (refer to Table 4).

The chemical composition of the Bi-containing layer shown in Table 4 is not the chemical composition of the Bi-containing layer formed in the production process of the solid-state battery, but is the chemical composition of the portion of Bi segregation in the TEM-EDX observation as described later.

In addition, the thickness of the Bi-containing layer shown in Table 4 is not the thickness of the Bi-containing layer formed in the process of producing the solid-state battery, but is the width of the portion of Bi segregation in the TEM-EDX observation as described later.

[Production of exterior ceramic]

As raw materials, lithium carbonate $Li_2CO_3$, magnesium oxide MgO, titanium oxide $TiO_2$, and manganese carbonate $MnCO_3$ were used.

Each starting material was weighed such that the chemical composition was as shown in Table 1.

Water was added, the resulting mixture was enclosed in a polyethylene polypot, and the polypot was rotated on a pot rack at 150 rpm for 16 hours to mix the starting materials.

In addition, lithium carbonate $Li_2CO_3$ as a Li source was charged in an excess of 12.5 % by weight with respect to the target composition in consideration of Li deficiency during sintering.

The obtained slurry was evaporated and dried, and then calcined in $O_2$ at 1030°C for 5 hours to obtain a target compound. A mixed solvent of toluene-acetone was added to the obtained calcined powder, and the resulting mixture was ground for 12 hours with a planetary ball mill. The ground powder was confirmed to have no compositional deviation by ICP measurement. The ground powder at this time had an average particle size of 150 nm.

[Production of exterior single plate]

As a sample for evaluation of exterior ceramics, an exterior single plate was produced by the following method.

The obtained ground powder was kneaded with a butyral resin, an alcohol, and a binder to produce a slurry.

The slurry was sheet-molded on a PET film using a doctor blade method to obtain a sheet. The fabricated sheet was stacked until the thickness of the sheet reached 200 $\mu$m, the binder was then removed at 400°C, and was subjected to sintering at 1280°C for 120 minutes to produce an exterior single plate. The porosity of the exterior single plate was 10% or less, and sufficient progress of the sintering was confirmed.

[Formation of bonding layer (Bi-containing layer)]

In Examples 1 to 4, a bonding layer was formed by the following method. In Comparative Examples 1 to 3, no bonding layer was formed.

Specifically, in Examples 1 to 4, a solution was made by dissolving a metal raw material selected from lithium nitrate $LiNO_3$, magnesium ethoxide $Mg(OC_2H_5)_5$, bismuth nitrate pentahydrate $Bi(NO_3)_3 \cdot 5H_2O$, and silicon tetraethoxide $(Si(OC_2H_5)_4)$, and ethyl acetoacetate in 2-methoxyethanol. For the composition of the bonding layer, the chemical composition of each Example described later was obtained by weighing. This solution was dipped on both surfaces of the WT surface of the exterior single plate, and then dried at 100°C. Thereafter, heat treatment was performed at 400°C to form a bonding layer. The bonding layers of Examples 1 to 4 are as described in Table 4. The WT surface of the exterior material is a surface in which a surface including the W direction and the T direction of the exterior portion is assumed, and is the surface of the exterior single plate described above in the present Example.

[Formation of terminal electrode (external electrode)]

In Examples 1 and 2 and Comparative Examples 1 and 2, external electrodes were produced by the following method.

A conductive paste obtained by kneading Ag powder, an ethyl cellulose-based resin, and an organic solvent was applied to the exterior single plate. After the application, drying in an oven at 150°C for 20 minutes caused the solvent in the conductive paste to be volatilized, thereby providing a dried film. After the application and drying, the terminal electrode was fired at 750°C for 10 minutes to form a dense terminal electrode on an exterior single plate. In Examples 1 and 2, a bonding layer (Bi-containing layer) was interposed between the exterior single plate and the terminal electrode.

In Examples 3 and 4 and Comparative Example 3, external electrodes were produced by the following method.

A conductive paste obtained by kneading Ag powder, a glass powder described in Table 4, an ethyl cellulose-based resin, and an organic solvent was applied to the exterior single plate. After the application, drying in an oven at 150°C for 20 minutes caused the solvent in the conductive paste to be volatilized, thereby providing a dried film. After the application and drying, the terminal electrode was fired at 750°C for 10 minutes to form a dense terminal electrode on an exterior single plate. In Examples 3 and 4, a bonding layer (Bi-containing layer) was interposed between the exterior single plate and the terminal electrode. The ratio of the glass powder was 1 vol% or more, preferably 10 vol% or more, and more preferably 15 vol% or more with respect to the total amount of the terminal electrode after firing.

[Fixing strength test]

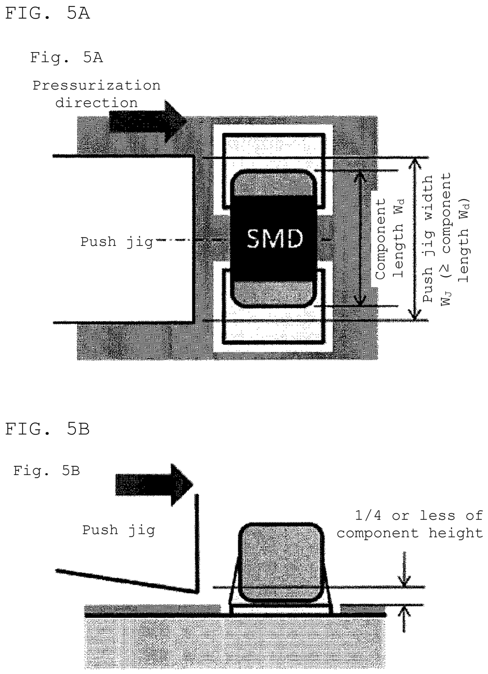

A test of the fixing strength between the exterior portion and the terminal electrode was simulatively performed using the exterior single plate bonded to the terminal electrode with the bonding layer interposed therebetween. Specifically, a NiCr layer was formed on the terminal electrode surface of the exterior single plate by sputtering, a NiCu layer was formed on the surface of the NiCr layer by sputtering, and an Ag layer was formed on the surface of the NiCu layer by sputtering. An Sn-Ag-Cu-based solder paste (M705-GRN360-K2-V) was applied to the surface of a substrate (FR-4), and a solid-state battery with a sputtered layer (NiCr layer, NiCu layer, and Ag layer) formed thereon was disposed thereon. The solder paste was thermally cured by heating the substrate with the solid-state battery disposed. As described above, the exterior single plate with the terminal electrode formed was mounted on the substrate. For each sample thus prepared, the adhesive strength was measured using Bond Tester DAGE-SERIES-5000PXY (P6J2) manufactured by Nordson DAGE. As shown in FIGS. 5A and 5B, the exterior single plate adhered to the substrate surface was pressed at a speed of 100 $\mu$m/s in a direction (horizontal direction) parallel to the substrate surface by a shear tool, and there was measured the strength (breaking strength) when the joint surface between the exterior single plate and the substrate was broken. The height of the shear tool from the substrate surface was set to 0.15 mm. The fixing strength of Comparative Examples and Examples was measured at n10, and was determined as the average value thereof.

[TEM-EDX observation]

In a TEM-EDX analysis method described later, a section between an oxide ceramic constituting an exterior single plate and a material constituting a terminal electrode (external electrode) (particularly, the vicinity of an interface region thereof) was cut out by FIB ion milling, and then observed by TEM-EDX (energy dispersive X-ray spectroscopy).

In Examples 1 to 4, as shown in FIG. 4A, Bi atoms were intensively segregated between the oxide ceramic 20 constituting the exterior single plate and the material 30 constituting the terminal electrode (external electrode) (particularly, an interface region thereof), and existed in a band shape or a layer shape in the interface region.

Particularly, in Example 4, Bi atoms were also observed in the region of the material 30 constituting the terminal electrode (external electrode), but Bi atoms were also intensively segregated between the oxide ceramic 20 constituting the exterior single plate and the material 30 constituting the terminal electrode (external electrode) (particularly, interface region thereof), and existed in a band shape or a layer shape in the interface region.

The width of the portion in which Bi atoms were intensively segregated was measured from the TEM-EDX mapping image, and the length was shown as the thickness of the Bi-containing layer in Table 4.

From the TEM-EDX mapping image, the chemical composition of the portion in which Bi atoms are intensively segregated can be determined.

In Comparative Examples 1 to 3, Bi atoms did not exist in any region of the region of the oxide ceramic 20 constituting the exterior single plate and the region of the material 30 constituting the terminal electrode (external electrode), and further, were not intensively segregated between these regions (particularly, an interface region thereof or the vicinity thereof), and did not exist in a band shape or a layer shape in the interface region thereof or in the vicinity thereof.

[TEM-EDX analysis]

The interface between the exterior single plate and the terminal electrode was processed into a thin piece by FIB treatment, and then element distribution at the interface between the exterior single plate and the terminal electrode was measured using TEM-EDX (energy dispersive X-ray spectroscopy).

· TEM-EDX

TEM apparatus: JEOL JEM-F200
EDX detector: EX-24390UBN5T
EDX system: Noran system 7

Measurement conditions: Bi is detected when EDX is performed at an acceleration voltage of 200 kV using a sample peeled at a thickness of 100 nm or less and measurement is performed under conditions where the count of Mg $K\alpha$ is 550,000 or more in each visual field of 666 nm.

[Chemical composition of exterior single plate]

The exterior single plate was subjected to ICP-AES analysis to obtain the average chemical composition of the exterior single plate.

[Content of Mg]

The content of Mg was determined as an average value by ICP-AES analysis of the exterior single plate.

[Crystal structure of exterior single plate]

In the exterior single plate, the crystal structure was analyzed with the following analysis apparatus and analysis conditions, and it has been confirmed that an X-ray diffraction image attributable to each crystal structure was obtained.

X-ray diffraction apparatus

Analysis apparatus: D2 PHASER manufactured by Bruker Corporation
Analysis conditions: Cu $K\alpha$ radiation; 28 = 10 to 60°; step size 0.02°/sec.

[Table 4]

| | Exterior portion | | | Bi-containing layer (chemical composition) | Thickness of Bi-containing layer | External electrode | Fixing strength (N) |
|---|---|---|---|---|---|---|---|
| | Oxide ceramic | | | | | | |
| | Chemical composition $Li_{\alpha 1}A_{\alpha 2}Mg_{\beta}M_{\gamma}O_{\delta}$ | Mg content (mass%) | Crystal structure | | | | |
| Example 1-1 | Li0.17Mg0.75Ti0.08O | 46.24 | Rock salt | Present LiBi0.33O | 17 nm | Ag | 86.0 N |
| Example 1-2 | Li0.17Mg0.75Ti0.08O | 46.24 | Rock salt | Present Li0.6Mg0.2Bi0.33O | 7 nm | Ag | 82.1 N |
| Example 1-3 | Li0.17Mg0.75Ti0.08O | 46.24 | Rock salt | Present Li0.8Mg0.1Bi0.33O | 31 nm | Ag | 87.3 N |
| Comparative Example 1 | Li0.17Mg0.75Ti0.08O | 46.24 | Rock salt | Absent | - | Ag | 34.9 N |
| Example 2-1 | Li0.29Mg0.57Ti0.14O | 35.72 | Rock salt | Present LiBi0.33O | 24 nm | Ag | 74.4 N |
| Example 2-2 | Li0.29Mg0.57Ti0.14O | 35.72 | Rock salt | Present LiBi0.2O | 16 nm | Ag | 71.1 N |
| Example 2-3 | Li0.29Mg0.57Ti0.14O | 35.72 | Rock salt | Present Li0.8Mg0.1Bi0.33O | 5 nm | Ag | 70.3 N |
| Comparative Example 2 | Li0.29Mg0.57Ti0.14O | 35.72 | Rock salt | Absent | - | Ag | 30.6 N |
| Example 3-1 | Li0.17Mg0.75Ti0.08O | 46.24 | Rock salt | Present Li0.66Si0.08Bi0.33O | 16 nm | Ag+B-Si-O glass | 104.3 N |
| Example 3-2 | Li0.17Mg0.75Ti0.08O | 46.24 | Rock salt | Present Li0.6Si0.05Bi0.4O | 29 nm | Ag+B-Si-O glass | 107.4 N |
| Example 3-3 | Li0.17Mg0.75Ti0.08O | 46.24 | Rock salt | Present Li0.62Mg0.02Si0.08Bi0.33O | 8 nm | Ag+B-Si-O glass | 101.8 N |
| Comparative Example 3 | Li0.17Mg0.75Ti0.08O | 46.24 | Rock salt | Absent | - | Ag+B-Si-O glass | Unmeasurable |
| Example 4 | Li0.17Mg0.75Ti0.08O | 46.24 | Rock salt | Present Li0.55Si0.11Bi0.22O | 31 nm | Ag+B-Si-Bi-O glass | 127.7 N |

Examples 1 to 3 correspond to the above-described aspect (1).

Example 4 corresponds to the above-described aspect (5) (specifically, an aspect in which the aspect (1) and the aspect (3) are combined).

INDUSTRIAL APPLICABILITY

The solid-state battery of the present invention can be used in various fields where use of a battery or storage of electricity is assumed. By way of example only, the solid-state battery of the present invention can be used in the field of electronics mounting. The solid-state battery of the present invention can also be used in the fields of electricity, information, and communication in which mobile devices and the like are used (for example, electric and electronic equipment fields or mobile equipment fields including mobile phones, smartphones, smartwatches, notebook computers, and small electronic machines such as digital cameras, activity meters, arm computers, electronic papers, wearable devices, RFID tags, card-type electronic money, and smartwatches), home and small industrial applications (for example, the fields of electric tools, golf carts, and home, nursing, and industrial robots), large industrial applications (for example, the fields of forklift, elevator, and harbor crane), transportation system fields (for example, the fields of hybrid vehicles, electric vehicles, buses, trains, power-assisted bicycles, electric two-wheeled vehicles, and the like), power system applications (for example, fields such as various types of power generation, road conditioners, smart grids, and household power storage systems), medical applications (medical device fields such as hearing aid buds), pharmaceutical applications (fields such as dosage management systems), IoT fields, space and deep sea applications (for example, fields such as space probes and submersibles), and the like.

DESCRIPTION OF REFERENCE SYMBOLS

1: Battery element
1a: Electrode layer (positive electrode layer and negative electrode layer)
1b: Solid electrolyte layer
1c: Insulating portion
2: Exterior portion
2a: Main surface exterior portion
2b: Side surface exterior portion
3: External electrode (external positive electrode and external negative electrode)
5: Interface region
20: Oxide ceramic
30: External electrode constituent material
50: Clear interface
51: Indefinite interface

**Claims**

1.   A solid-state battery comprising a battery element, an exterior portion present on an outer surface of the battery element, and an external electrode in contact with the exterior portion, wherein
the exterior portion includes an oxide ceramic containing:

Li (lithium);
Mg (magnesium); and
one or more elements (M) selected from the group consisting of Group 4 and Group 5 elements, and
Bi (bismuth) exists between the exterior portion and the external electrode.

2.   The solid-state battery according to claim 1, wherein the external electrode includes Ag (silver).

3.   The solid-state battery according to claim 1 or 2, wherein the external electrode is composed only of Ag.

4.   The solid-state battery according to any one of claims 1 to 3, wherein the oxide ceramic has a rock salt type crystal structure.

5. The solid-state battery according to any one of claims 1 to 4, wherein the exterior portion has a layer form.

6. The solid-state battery according to any one of claims 1 to 5, wherein the exterior portion is in direct contact with a surface of the battery element.

7. The solid-state battery according to claims 1 to 6, wherein the battery element includes a garnet type solid electrolyte.

8. The solid-state battery according to claim 7, wherein

the battery element includes one or more battery constituent units including a positive electrode layer and a negative electrode layer facing each other and a solid electrolyte layer disposed between the positive electrode layer and the negative electrode layer, and
the solid electrolyte is included in one or more layers selected from the positive electrode layer, the negative electrode layer, and the solid electrolyte layer.

9. The solid-state battery according to any one of claims 1 to 8, wherein the Bi (bismuth) is segregated between the exterior portion and the external electrode.

10. The solid-state battery according to claim 9, wherein a portion where the Bi (bismuth) is segregated has a width of 1 to 100 nm.

FIG. 1

FIG. 1

FIG. 2

FIG. 2

FIG. 3A

FIG. 3A

FIG. 3B

FIG. 3B

FIG. 4A

FIG. 4B

FIG. 4C

FIG. 4D

FIG. 4A

FIG. 4B

FIG. 4C

FIG. 4D

FIG. 5A

Fig. 5A

FIG. 5B

Fig. 5B

## INTERNATIONAL SEARCH REPORT

| International application No. |
| --- |
| **PCT/JP2024/034652** |

### A. CLASSIFICATION OF SUBJECT MATTER

*H01M 50/117*(2021.01)i; *H01M 4/62*(2006.01)i; *H01M 6/18*(2006.01)i; *H01M 10/052*(2010.01)i; *H01M 10/058*(2010.01)i; *H01M 10/0562*(2010.01)i; *H01M 50/11*(2021.01)i; *H01M 50/103*(2021.01)i; *H01M 50/124*(2021.01)i; *H01M 50/548*(2021.01)i; *H01M 50/562*(2021.01)i
FI: H01M50/117; H01M4/62 Z; H01M6/18 A; H01M6/18 Z; H01M10/052; H01M10/0562; H01M10/058; H01M50/103; H01M50/11; H01M50/124; H01M50/548 101; H01M50/562

According to International Patent Classification (IPC) or to both national classification and IPC

### B. FIELDS SEARCHED

Minimum documentation searched (classification system followed by classification symbols)

H01M50/117; H01M4/62; H01M6/18; H01M10/052; H01M10/058; H01M10/0562; H01M50/11; H01M50/103; H01M50/124; H01M50/548; H01M50/562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2022/239351 A1 (PANASONIC INTELLECTUAL PROPERTY MANAGEMENT CO., LTD.) 17 November 2022 (2022-11-17)<br>        paragraph [0099] | 1-10 |
| A | WO 2022/153642 A1 (PANASONIC INTELLECTUAL PROPERTY MANAGEMENT CO., LTD.) 21 July 2022 (2022-07-21)<br>        paragraph [0135] | 1-10 |
| A | WO 2021/070601 A1 (MURATA MANUFACTURING CO., LTD.) 15 April 2021 (2021-04-15)<br>        entire text, all drawings | 1-10 |

☑ Further documents are listed in the continuation of Box C.    ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **10 December 2024** | **24 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/034652**

| C. | DOCUMENTS CONSIDERED TO BE RELEVANT | |
|---|---|---|
| Category* | Citation of document, with indication, where appropriate, of the relevant passages | Relevant to claim No. |
| A | WO 2021/070927 A1 (MURATA MANUFACTURING CO., LTD.) 15 April 2021 (2021-04-15)<br>entire text, all drawings | 1-10 |

**INTERNATIONAL SEARCH REPORT**
**Information on patent family members**

International application No.

**PCT/JP2024/034652**

| Patent document cited in search report | | | Publication date (day/month/year) | Patent family member(s) | | | Publication date (day/month/year) |
|---|---|---|---|---|---|---|---|
| WO | 2022/239351 | A1 | 17 November 2022 | US 2024/0055735 A1 paragraph [0103] CN 117223166 A | | | |
| WO | 2022/153642 | A1 | 21 July 2022 | US 2023/0335790 A1 paragraph [0146] EP 4280334 A1 CN 116830334 A | | | |
| WO | 2021/070601 | A1 | 15 April 2021 | US 2022/0231389 A1 entire text, all drawings CN 114503357 A | | | |
| WO | 2021/070927 | A1 | 15 April 2021 | US 2022/0209338 A1 entire text, all drawings EP 4044298 A1 CN 114556671 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019167856 A
- JP 2007173212 A
- JP 2003092092 A
- WO 2019181909 A

**Non-patent literature cited in the description**

- **A. R. WEST**. *J. solid state chem.*, 1972, vol. 4, 20-28